# EUROPEAN PATENT SPECIFICATION

(11) **EP 4 649 623 B1**
(45) Date of publication and mention of the grant of the patent: **14.10.2026**
(21) Application number: 23713275.8
(22) Date of filing: 17.02.2023
(51) Int. Cl.: H04L 5/00

(54) **TRANSMITTING TIME DIVISION MULTIPLEXING BASED MULTIPLE PORTS SOUNDING REFERENCE SIGNALS IN MULTIPLE SYMBOLS**
ÜBERTRAGUNG VON AUF ZEITMULTIPLEXING BASIERENDEN TONREFERENZSIGNALEN MIT MEHREREN PORTS IN MEHREREN SYMBOLEN
TRANSMISSION DE SIGNAUX DE RÉFÉRENCE DE SONDAGE À PORTS MULTIPLES REPOSANT SUR UN MULTIPLEXAGE PAR RÉPARTITION DANS LE TEMPS DANS DE MULTIPLES SYMBOLES

(43) Date of publication of application: 19.11.2025
(73) Proprietor: Google LLC, Mountain View, CA 94043 (US)
(72) Inventor: LIOU, Jia-Hong, Taipei City Taiwan 10548 (CN); ZHANG, Yushu, Beijing 100190 (CN)
(74) Representative: Marks & Clerk GST
(86) International application number: PCT/CN2023/076930
(87) International publication number: WO 2024/168870

(56) References cited:
- EP-B1- 3 584 982
- CATT: "Remaining issues on SRS enhancement", vol. RAN WG1, no. e-Meeting; 20211111 - 20211119, 6 November 2021 (2021-11-06), XP052074753, Retrieved from the Internet <URL:https://ftp.3gpp.org/tsg_ran/WG1_RL1/TSGR1_107-e/Docs/R1-2111226.zip R1-2111226.docx> [retrieved on 20211106]

## Description

### FIELD

The present disclosure relates generally to wireless communications, and more particularly, to sounding reference signals (SRS).

### BACKGROUND

The Third Generation Partnership Project (3GPP) specifies a radio interface referred to as fifth generation (5G) new radio (NR) (5G NR). An architecture for a 5G NR wireless communication system includes a 5G core (5GC) network, a 5G radio access network (5G-RAN), a user equipment (UE), etc. The 5G NR architecture seeks to provide increased data rates, decreased latency, and/or increased capacity compared to prior generation cellular communication systems.

A sounding reference signal (SRS) transmitted by a user equipment (UE) allows a network entity (such as a base station) to perform uplink (UL) channel quality estimation (e.g., before selecting a channel as a physical uplink share channel, PUSCH). The network entity may specify or configure SRS resources (e.g., in the time and frequency domains) usable by the UE for transmitting SRSs. For example, the network entity may configure the SRS resources by specifying: (1) a number of antenna ports, (2) a number of symbols (e.g., orthogonal frequency division multiplexing (OFDM) symbols), (3) a starting position in the time domain, and (4) a starting position in the frequency domain.

In general, an antenna port represents a channel (e.g., the one whose quality is to be estimated) over which a symbol on the antenna port is conveyed can be inferred from the channel over which another symbol on the same antenna port is conveyed. Different antenna ports may be mapped to different physical antennas or mapped to different beams produced by the same set of physical antennas. According to aspects of the present disclosure, a multi-port SRS transmission refers to SRSs transmitted by a UE using multiple antenna ports. The number of antenna ports may be provided by a higher layer parameter (e.g., *nrofSRS-Ports*) if configured, or a default value. Multi-port SRS may be transmitted in multiple symbols.

When a UE transmits multi-port SRSs in plural symbols, the UE may generate these SRSs using different cyclic shifts and/or different comb offsets (among other different parameters). For example, when a base station configures the comb offset and cyclic shift for the first antenna port for an SRS resource, the UE then determines another different comb offset and/or cyclic shift for other antenna ports based on the first antenna port's comb offset and cyclic shift. As the number of antenna ports increases, the UE may be unable to transmit all the multi-port SRSs in one symbol. As a result, the UE may transmit multi-port SRSs using different sets of antenna ports in different symbols, not achieving full power.

EP 3 584 982 B1 relates to a method for receiving SRS configuration information by a terminal. The method may comprise the steps of: receiving, from a base station, the SRS configuration information including information on the number of simultaneously transmissible SRS resources configured for the terminal; and performing SRS transmission on the basis of the SRS configuration information.

CATT: "Remaining issues on SRS enhancements", 3GPP Draft, R1-2111226 is a discussion paper in which views on remaining issues of Rel-17 SRS enhancement are provided.

### SUMMARY

The following presents a simplified summary of one or more aspects in order to provide a basic understanding of such aspects. This summary is not an extensive overview of all contemplated aspects. This summary neither identifies key or critical elements of all aspects nor delineates the scope of any or all aspects. Its sole purpose is to present some concepts of one or more aspects in a simplified form as a prelude to the more detailed description that is presented later.

Methods, systems, and techniques for transmitting (and configuring to transmit) time division multiplexing (TDM) based multiple ports ("multi-port") sounding reference signals (SRSs). As mentioned above, when a UE transmits SRSs in one symbol from multiple antenna ports, the UE may use different cyclic shifts and/or different comb offsets for the multiple antenna ports (among other different parameters). For example, when a base station configures the comb offset and cyclic shift for the first antenna port for an SRS resource, the UE then determines the comb offset and the cyclic shift for the other antenna ports based on the first antenna port configuration. As the number of multiple antenna ports increases, the UE may not transmit the SRSs from the multiple antenna ports in one symbol. As a result, the UE may transmit an SRS using different sets of antenna ports not using full power transmission in the antenna ports over multiple symbols, lowering performance and efficiency.

An aspect of this disclosure include a wireless communication method by a UE according to claim 1.

An aspect of this disclosure include a wireless communication method by a network entity, NE, according to claim 12.

An aspect of this disclosure includes a wireless communication device according to claim 14.

### BRIEF DESCRIPTION OF THE DRAWINGS

FIG. 1 illustrates a diagram of a wireless communications system that includes a plurality of user equipments (UEs) and network entities in communication over one or more cells.
FIG. 2 illustrates an example of TDM based multi-port SRS transmission, in accordance with aspects of this disclosure.
FIG. 3 illustrates an example of TDM based multi-port SRS transmission when a fast power change may occur, in accordance with aspects of this disclosure.
FIG. 4 illustrates an example of TDM based multi-port SRS transmission when SRS overlaps with other uplink signals and the transmission power level updates, in accordance with aspects of this disclosure.
FIG. 5 illustrates an example signaling diagram between a user equipment (UE) and a network entity for full power multi-port SRS transmission as determined by the UE, in accordance with aspects of this disclosure.
FIG. 6 illustrates an example signaling diagram between a UE and a network entity for full power multi-port SRS transmission as indicated by the network entity, in accordance with aspects of this disclosure.
FIG. 7 is a flowchart of a method of wireless communications by a UE for full power multi-port SRS transmission, in accordance with aspects of this disclosure.
FIG. 8 is a flowchart of a method of wireless communications by a network entity for full power multi-port SRS transmission, in accordance with aspects of this disclosure.
FIG. 9 illustrates an example signaling diagram between a UE and a network entity for multi-port SRS transmission as the UE determines the resource for each symbol of the SRS, in accordance with aspects of this disclosure.
FIG. 10 illustrates an example signaling diagram between a UE and a network entity for multi-port SRS transmission as the resource for each symbol of the SRS indicated by the network entity, in accordance with aspects of this disclosure.
FIG. 11 is a flowchart of a method of wireless communications by a UE for multi-port SRS transmission, in accordance with aspects of this disclosure.
FIG. 12 is a flowchart of a method of wireless communications by a network entity for multi-port SRS transmission, in accordance with aspects of this disclosure.
FIG. 13 illustrates an example of multi-port SRS transmission having a repetition priority based operation, in accordance with aspects of this disclosure.
FIG. 14 illustrates an example of multi-port SRS transmission having a multiplexing priority based operation, in accordance with aspects of this disclosure.
FIG. 15 illustrates an example signaling diagram between a UE and a network entity for multi-port SRS transmission overlapping with a second uplink signal, in accordance with aspects of this disclosure.
FIG. 16 is a flowchart of a method of wireless communications by a UE for multi-port SRS transmission overlapping with a second uplink signal, in accordance with aspects of this disclosure.
FIG. 17 is a flowchart of a method of wireless communications by a network entity for multi-port SRS transmission overlapping with a second uplink signal, in accordance with aspects of this disclosure.
FIG. 18 illustrates an example of power scaling per symbol when a multi-port SRS transmission overlaps with a second uplink signal, in accordance with aspects of this disclosure.
FIG. 19 illustrates an example of power scaling per symbol group when a multi-port SRS transmission overlaps with a second uplink signal, in accordance with aspects of this disclosure.
FIG. 20 illustrates an example of power scaling per resource when a multi-port SRS transmission overlaps with a second uplink signal, in accordance with aspects of this disclosure.
FIG. 21 illustrates an example of signal dropping per symbol when a multi-port SRS transmission overlaps with a second uplink signal, in accordance with aspects of this disclosure.
FIG. 22 illustrates an example of signal dropping per symbol group when a multi-port SRS transmission overlaps with a second uplink signal, in accordance with aspects of this disclosure.
FIG. 23 illustrates an example of signal dropping per resource when a multi-port SRS transmission overlaps with a second uplink signal, in accordance with aspects of this disclosure.
FIG. 24 is a flowchart of a method of wireless communication at a UE, in accordance with aspects of this disclosure.
FIG. 25 is a flowchart of a method of wireless communication at a network entity, in accordance with aspects of this disclosure.
FIG. 26 is a diagram illustrating a hardware implementation for an example UE apparatus, in accordance with aspects of this disclosure.
FIG. 27 is a diagram illustrating a hardware implementation for one or more example network entities, in accordance with aspects of this disclosure.

Like numerals indicate like elements.

### DETAILED DESCRIPTION

The present disclosure provides methods, systems, and techniques for transmitting (and configuring to transmit) time division multiplexing (TDM) based multiple ports ("multi-port") sounding reference signals (SRSs). A sounding reference signal (SRS) transmitted by a user equipment (UE) allows a network entity (such as a base station) to perform uplink (UL) channel quality estimation (e.g., before selecting a channel as a physical uplink share channel, PUSCH). The network entity may configure different usages of the SRS with the UE, such as SRS for codebook (CB) based transmission (SRS for CB), SRS for non-codebook (NCB) based transmission (SRS for NCB), SRS for beam management (BM) and SRS for antenna switching (AS).

For example, the network entity may configure the usage of an SRS resource set by the radio resource control (RRC) parameter *usage.* The network entity may specify or configure SRS resources (e.g., in the time and frequency domains) usable by the UE for transmitting SRSs. For example, the network entity may configure the SRS resources by specifying: (1) a number of antenna ports, (2) a number of symbols (e.g., orthogonal frequency division multiplexing (OFDM) symbols), (3) a starting position in the time domain, and (4) a starting position in the frequency domain. According to 3GPP standards, the technical specifications specify sequence generation and resource mapping of SRS, the uplink control for the SRS, the procedure for SRS transmission, and full power transmission mode for uplink transmissions.

When a UE is configured to transmit a multi-port SRS in one symbol, the UE may not achieve full power transmission (e.g., as defined in 3GPP TS 38.213, Section 7.3, Ver. 17.3.0), depending on the UE's power amplification architecture. When the UE is configured to transmit the multi-port SRS from only part of the multiple antenna ports, the UE is not necessarily able to transmit the SRS at the maximum transmission power. Per legacy requirements, the UE needs to split the linear transmission power based on the number of configured antenna ports. For example, for uplink transmission status of an eight-port SRS in two symbols for a power class 3 UE, which has a maximum transmission power of 23 dBm, the current specifications support only 14 dBm across the eight ports in either symbol. That is, the UE splits the linear transmission power based on the number of configured SRS ports for an SRS resource. The reduced transmission power may result in a higher noise-to-signal ratio during operation and negatively impact the sounding procedures. Aspects of this disclosure overcome such issues by enabling full (or otherwise adjusted to maximize) power transmission of TDM based multi-port SRS in multiple symbols of different types of UE in various situations.

When the UE needs to update its transmission power (e.g., for transmitting SRS), the UE may need a time or symbol gap for a practical transition. That is, it may not be practical for the UE to change the transmission power for every two sequential symbols. The present disclosure addresses this problem by supporting flexible configuration of various SRS parameters (e.g., comb offset, cyclic shift, etc.) for each symbol.

In some situations, the UE is configured to simultaneously transmit the multi-port SRS and another uplink signal (e.g., physical uplink shared channel (PUSCH) or physical uplink control channel (PUCCH)), over one or more common symbols (referred to as overlapping or overlapped transmission). The UE may need to adjust (e.g., scaling or dropping) the respective transmission powers for the multi-port SRS and the other uplink signal in view of the maximum transmission power.

By using full power transmission of the multi-port SRS and allowing for flexible configuration and/or power adjustments, the UE helps improving overall system performance (e.g., reducing random errors caused by noise, reducing complexity for rapid power updates, etc.). For example, full power transmission increases the coverage of the SRS. Aspects of the flexible control signaling for each SRS symbols with regard to fast power update and multiplexing with other SRSs may reduce the UE's implementation complexity. This reduces the UE power consumption. The flexible multi-port SRS control may also increase the SRS capacity, utilization, or both. The uplink transmission power selection or scaling for partially overlapped cases, in which the UE determines the corresponding transmission power for the non-overlapped SRS symbol(s) and overlapped symbol(s), may allow the UE to scale or drop associated signals (e.g., the overlapping and/or unnecessary ones) so as to reduce the overhead and UE power consumption.

When a UE transmits SRSs in one symbol from multiple antenna ports, the UE may use different cyclic shifts and/or different comb offsets for the multiple antenna ports (among other different parameters). The UE transmits one SRS resource in one symbol. The UE may transmit the SRS from multiple antenna ports, e.g., the UE transmits using all the multiple antenna ports with the different cyclic shifts and/or different comb offsets in one symbol. The network often configures the comb offset and cyclic shift for the first antenna port for an SRS resource, and the UE may determine the comb offset and cyclic shift based on the configured comb offset and cyclic shift for the first antenna port. In one example, the network may transmit RRC signaling/message to configure the comb offset and cyclic shift for the first antenna port for an SRS resource. The network may configure comb offset by *combOffset* and configure cyclic shift by *cyclicShift* using the example below.

### Example:

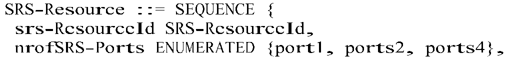

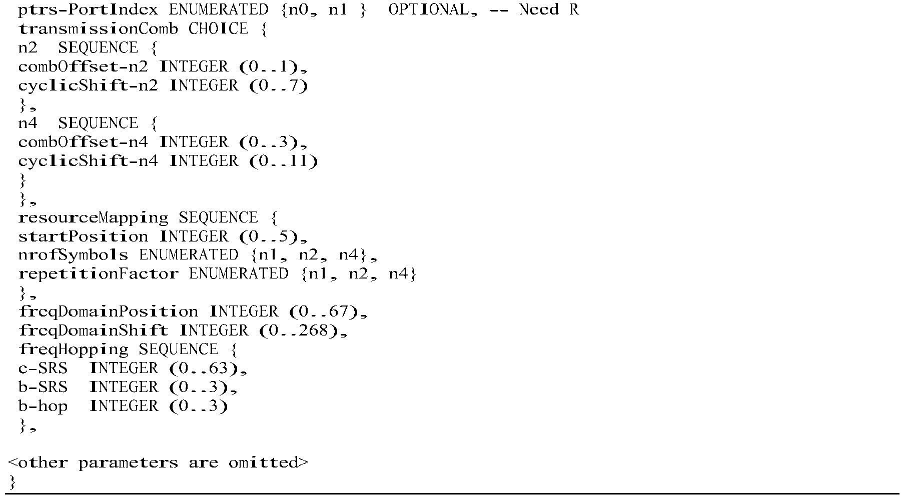

When a UE is configured to transmit a multi-port SRS in one symbol, the UE may not achieve full power transmission (e.g., as defined in 3GPP TS 38.101-1, Section 6.2.1, Ver. 17.7.0), depending on the UE's power amplification architecture. When the UE is configured to transmit the multi-port SRS from only part of the multiple antenna ports, the UE is not necessarily able to transmit the SRS at the maximum transmission power. Per legacy requirements, the UE needs to split the linear transmission power based on the number of configured antenna ports. For example, for uplink transmission status of an eight-port SRS in two symbols for a power class 3 UE, which has a maximum transmission power of 23 dBm, the current specifications support only 14 dBm across the eight ports in either symbol. That is, the UE splits the linear transmission power based on the number of configured SRS ports for an SRS resource. The reduced transmission power may result in a higher noise-to-signal ratio during operation and negatively impact the sounding procedures.

Aspects of this disclosure overcome such issues (and provide advantages) by enabling full (or otherwise adjusted to maximize) power transmission of TDM based multi-port SRS in multiple symbols of different types of UE in various situations, including determining which SRS resource may use full or maximum allowable power levels. By using full power transmission of the multi-port SRS and allowing for flexible configuration and/or power adjustments, the UE helps improving overall system performance (e.g., reducing random errors caused by noise, reducing complexity for rapid power updates, etc.).

For example, the higher is the transmission power (e.g., "full" as high as UE is able to deliver) the larger becomes coverage of the SRS. Aspects of the flexible control signaling for each SRS symbols with regard to fast power update and multiplexing with other SRSs may reduce the UE's implementation complexity. This reduces the UE power consumption. The flexible multi-port SRS power control may also increase the SRS capacity, utilization, or both. The uplink transmission power selection or scaling for partially overlapped signals, in which the UE determines the corresponding transmission power for the non-overlapped SRS symbol(s) and overlapped symbol(s), may allow the UE to scale or drop associated signals (e.g., the overlapping and/or unnecessary ones) so as to reduce the overhead and UE power consumption. Details of implementing the disclosed techniques are discussed below.

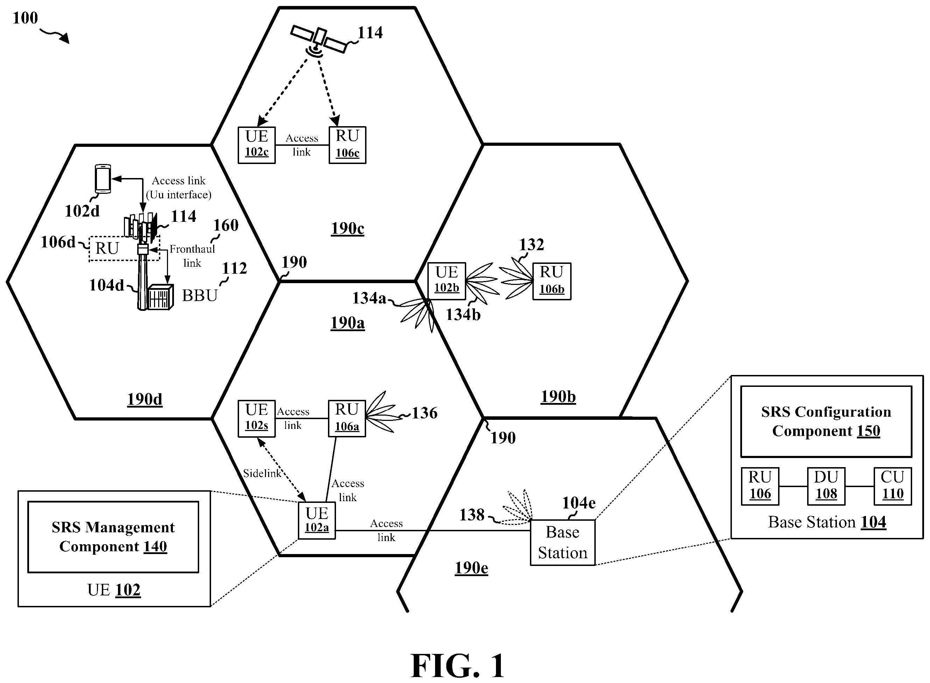

FIG. 1 illustrates a diagram 100 of a wireless communications system associated with a plurality of cells 190. The wireless communications system includes user equipments (UEs) 102 and base stations/network entities 104. Some base stations may include an aggregated base station architecture and other base stations may include a disaggregated base station architecture. The aggregated base station architecture includes a radio unit (RU) 106, a distributed unit (DU) 108, and a centralized unit (CU) 110 that are configured to utilize a radio protocol stack that is physically or logically integrated within a single radio access network (RAN) node. A disaggregated base station architecture utilizes a protocol stack that is physically or logically distributed among two or more units (e.g., RUs 106, DUs 108, CUs 110). For example, a CU 110 is implemented within a RAN node, and one or more DUs 108 may be co-located with the CU 110, or alternatively, may be geographically or virtually distributed throughout one or multiple other RAN nodes. The DUs 108 may be implemented to communicate with one or more RUs 106. Each of the RU 106, the DU 108 and the CU 110 can be implemented as virtual units, such as a virtual radio unit (VRU), a virtual distributed unit (VDU), or a virtual central unit (VCU). The base station/network entity 104 (e.g., an aggregated base station or disaggregated units of the base station, such as the RU 106, the DU 108, or the CU 110), may be referred to as a transmission reception point (TRP).

Operations of the base station 104 (an example of a network entity 104, interchangeable herein) and/or network designs may be based on aggregation characteristics of base station functionality. For example, disaggregated base station architectures are utilized in an integrated access backhaul (IAB) network, an openradio access network (O-RAN) network, or a virtualized radio access network (vRAN), which may also be referred to a cloud radio access network (C-RAN). Disaggregation may include distributing functionality across the two or more units at various physical locations, as well as distributing functionality for at least one unit virtually, which can enable flexibility in network designs. The various units of the disaggregated base station architecture, or the disaggregated RAN architecture, can be configured for wired or wireless communication with at least one other unit. For example, the RUs 106a-106d may communicate with respective UEs 102a-102d and 102s via one or more radio frequency (RF) access links based on a Uu interface. In examples, multiple RUs 106 and/or base stations 104 may simultaneously serve the UEs 102, such as the UE 102a of the cell 190a that the access links for the RU 106a of the cell 190a and the base station 104c of the cell 190e simultaneously serve.

The RU 106, the DU 108, and the CU 110 may include (or may be coupled to) one or more interfaces configured to transmit or receive information/signals via a wired or wireless transmission medium. A base station 104 or any of the one or more disaggregated base station units can be configured to communicate with one or more other base stations 104 or one or more other disaggregated base station units via the wired or wireless transmission medium. In examples, a processor, a memory, and/or a controller associated with executable instructions for the interfaces can be configured to provide communication between the base stations 104 and/or the one or more disaggregated base station units via the wired or wireless transmission medium. For example, a wired interface can be configured to transmit or receive the information/signals over a wired transmission medium, such as via the fronthaul link 160 between the RU 106d and the baseband unit (BBU) 112 of the base station 104d associated with the cell 190d. The BBU 112 includes a DU 108 and a CU 110, which may also have a wired interface (e.g., midhaul link) configured between the DU 108 and the CU 110 to transmit or receive the information/signals between the DU 108d and the CU 110d. In further examples, a wireless interface, which may include a receiver, a transmitter, or a transceiver, such as an RF transceiver, configured to transmit and/or receive the information/signals via the wireless transmission medium, such as for information communicated between the RU 106a of the cell 190a and the base station 104 of the cell 190e via cross-cell communication beams 136-138 of the RU 106a and the base station 104e.

The RUs 106 may be configured to implement lower layer functionality. For example, the RU 106 is controlled by the DU 108 and may correspond to a logical node that hosts RF processing functions, or lower layer PHY functionality, such as execution of fast Fourier transform (FFT), inverse FFT (iFFT), digital beamforming, physical random access channel (PRACH) extraction and filtering, etc. The functionality of the RU 106 may be based on the functional split, such as a functional split of lower layers.

The RUs 106 may transmit or receive over-the-air (OTA) communication with one or more UEs 102. For example, the RU 106b of the cell 190b communicates with the UE 102b of the cell 190b via a first set of communication beams 132 of the RU 106b and a second set of communication beams 134b of the UE 102b, which may correspond to inter-cell communication beams or, in some examples, cross-cell communication beams. For instance, the UE 102b of the cell 190b may communicate with the RU 106a of the cell 190a via a third set of communication beams 134a of the UE 102b and a fourth set of communication beams 136 of the RU 106a. Both real-time and non-real-time features of control plane and user plane communications of the RUs 106 can be controlled by associated DUs 108.

Any combination of the RU 106, the DU 108, and the CU 110, or reference thereto individually, may correspond to a base station 104. Thus, the base station 104 may include at least one of the RU 106, the DU 108, or the CU 110. The base stations 104 provide the UEs 102 with access to a core network. The base stations 104 might relay communications between the UEs 102 and the core network. The base stations 104 may be associated with macrocells for high-power cellular base stations and/or small cells for low-power cellular base stations. For example, the cell 190e may correspond to a macrocell, whereas the cells 190a-190d may correspond to small cells. Small cells include femtocells, picocells, microcells, etc. A cell structure that includes at least one macrocell and at least one small cell may be referred to as a "heterogeneous network."

Transmissions from a UE 102 to a base station 104/RU 106 are referred to as uplink (UL) transmissions, whereas transmissions from the base station 104/RU 106 to the UE 102 are referred to as downlink (DL) transmissions. Uplink transmissions may also be referred to as reverse link transmissions and downlink transmissions may also be referred to as forward link transmissions. For example, the RU 106d utilizes antennas 114 of the base station 104d of cell 190d to transmit a downlink/forward link communication to the UE 102d or receive an uplink/reverse link communication from the UE 102d based on the Uu interface associated with the access link between the UE 102d and the base station 104d/RU 106d.

Communication links between the UEs 102 and the base stations 104/RUs 106 may be based on multiple-input and multiple-output (MIMO) antenna technology, including spatial multiplexing, beamforming, and/or transmit diversity. The communication links may be associated with one or more carriers. The UEs 102 and the base stations 104/RUs 106 may utilize a spectrum bandwidth of *Y* MHz (e.g., 5, 10, 15, 20, 100, 400, 800, 1600, 2000, etc. MHz) per carrier allocated in a carrier aggregation of up to a total of *Yx* MHz, where x component carriers (CCs) are used for communication in each of the uplink and downlink directions. The carriers may or may not be adjacent to each other along a frequency spectrum. In examples, uplink and downlink carriers may be allocated in an asymmetric manner, more or fewer carriers may be allocated to either the uplink or the downlink. A primary component carrier and one or more secondary component carriers may be included in the component carriers. The primary component carrier may be associated with a primary cell (PCell) and a secondary component carrier may be associated with as a secondary cell (SCell).

Some UEs 102, such as the UEs 102a and 102s, may perform device-to-device (D2D) communications over sidelink. For example, a sidelink communication/D2D link utilizes a spectrum for a wireless wide area network (WWAN) associated with uplink and downlink communications. The sidelink communication/D2D link may also use one or more sidelink channels, such as a physical sidelink broadcast channel (PSBCH), a physical sidelink discovery channel (PSDCH), a physical sidelink shared channel (PSSCH), and/or a physical sidelink control channel (PSCCH), to communicate information between UEs 102a and 102s. Such sidelink/D2D communication may be performed through various wireless communications systems, such as wireless fidelity (Wi-Fi) systems, Bluetooth systems, Long Term Evolution (LTE) systems, New Radio (NR) systems, etc.

The electromagnetic spectrum is often subdivided into different classes, bands, channels, etc., based on different frequencies/wavelengths associated with the electromagnetic spectrum. Fifth-generation (5G) NR is generally associated with two operating frequency ranges (FRs) referred to as frequency range 1 (FR1) and frequency range 2 (FR2). FR1 ranges from 410 MHz - 7.125 GHz and FR2 ranges from 24.25 GHz - 71.0 GHz, which includes FR2-1 (24.25 GHz - 52.6 GHz) and FR2-2 (52.6 GHz - 71.0 GHz). Although a portion of FR1 is actually greater than 6 GHz, FR1 is often referred to as the "sub-6 GHz" band. In contrast, FR2 is often referred to as the "millimeter wave" (mmW) band. FR2 is different from, but a near subset of, the "extremely high frequency" (EHF) band, which ranges from 30 GHz - 300 GHz and is sometimes also referred to as a "millimeter wave" band. Frequencies between FR1 and FR2 are often referred to as "mid-band" frequencies. The operating band for the mid-band frequencies may be referred to as frequency range 3 (FR3), which ranges 7.125 GHz - 24.25 GHz. Frequency bands within FR3 may include characteristics of FR1 and/or FR2. Hence, features of FR1 and/or FR2 may be extended into the mid-band frequencies. Higher operating frequency bands have been identified to extend 5G NR communications above 52.6 GHz associated with the upper limit of FR2. Three of these higher operating frequency bands include FR2-2, which ranges from 52.6 GHz - 71.0 GHz, FR4, which ranges from 71.0 GHz - 114.25 GHz, and FR5, which ranges from 114.25 GHz - 300 GHz. The upper limit of FR5 corresponds to the upper limit of the EHF band. Thus, unless otherwise specifically stated herein, the term "sub-6 GHz" may refer to frequencies that are less than 6 GHz, within FR1, or may include the mid-band frequencies. Further, unless otherwise specifically stated herein, the term "millimeter wave", or mmW, refers to frequencies that may include the mid-band frequencies, may be within FR2-1, FR4, FR2-2, and/or FR5, or may be within the EHF band.

The UEs 102 and the base stations 104/RUs 106 may each include a plurality of antennas. The plurality of antennas may correspond to antenna elements, antenna panels, and/or antenna arrays that may facilitate beamforming operations. For example, the RU 106b transmits a downlink beamformed signal based on a first set of communication beams 132 to the UE 102b in one or more transmit directions of the RU 106b. The UE 102b may receive the downlink beamformed signal based on a second set of communication beams 134b from the RU 106b in one or more receive directions of the UE 102b. In a further example, the UE 102b may also transmit an uplink beamformed signal to the RU 106b based on the second set of communication beams 134b in one or more transmit directions of the UE 102b. The RU 106b may receive the uplink beamformed signal from the UE 102b in one or more receive directions of the RU 106b.

The UE 102b may perform beam training to determine the best beams for receiving and transmitting signals from and to a base station. The transmission and reception beams for the UEs 102 and the base stations 104/RUs 106 might not be the same. In further examples, beamformed signals may be communicated between a first base station/RU 104a and a second base station 104e. For instance, the base station 104e of the cell 190e may transmit a beamformed signal to the RU 106a based on the communication beams 138 in one or more transmit directions of the base station 104e. The RU 106a may receive the beamformed signal from the base station 104e of the cell 190e based on the RU communication beams 136 in one or more receive directions of the RU 106a.

The base station 104 may include and/or be referred to as a network entity. That is, "network entity" may refer to the base station 104 or at least one unit of the base station 104, such as the RU 106, the DU 108, and/or the CU 110. The base station 104 may also include and/or be referred to as a next generation evolved Node B (ng-eNB), a generation NB (gNB), an evolved NB (eNB), an access point, a base transceiver station, a radio base station, a radio transceiver, a transceiver function, a basic service set (BSS), an extended service set (ESS), a TRP, a network node, network equipment, or other related terminology. The base station 104 or an entity at the base station 104 can be implemented as an IAB node, a relay node, a sidelink node, an aggregated (monolithic) base station with an RU 106 and a BBU 112 that includes a DU 108 and a CU 110, or as a disaggregated base station including one or more RUs 106, DUs 108, and/or CUs 110. A set of aggregated or disaggregated base stations may be referred to as a next generation-radio access network (NG-RAN). In some examples, the UE 102a operates in dual connectivity (DC) with the base station 104e and the base station/RU 106a. In such cases, the base station 104e can be a master node and the base station/RU 160a can be a secondary node.

Uplink/downlink signals may be communicated via a satellite positioning system (SPS) 114. In an example, the SPS 114 of the cell 190c may be in communication with one or more UEs 102, such as the UE 102c, and one or more base stations 104/RUs 106, such as the RU 106c. The SPS 114 may correspond to one or more of a Global Navigation Satellite System (GNSS), a global position system (GPS), a non-terrestrial network (NTN), or other satellite position/location system. The SPS 114 may be associated with LTE signals, NR signals (e.g., based on round trip time (RTT) and/or multi-RTT), wireless local area network (WLAN) signals, a terrestrial beacon system (TBS), sensor-based information, NR enhanced cell ID (NR E-CID) techniques, downlink angle-of-departure (DL-AoD), downlink time difference of arrival (DL-TDOA), uplink time difference of arrival (UL-TDOA), uplink angle-of-arrival (UL-AoA), and/or other systems, signals, or sensors.

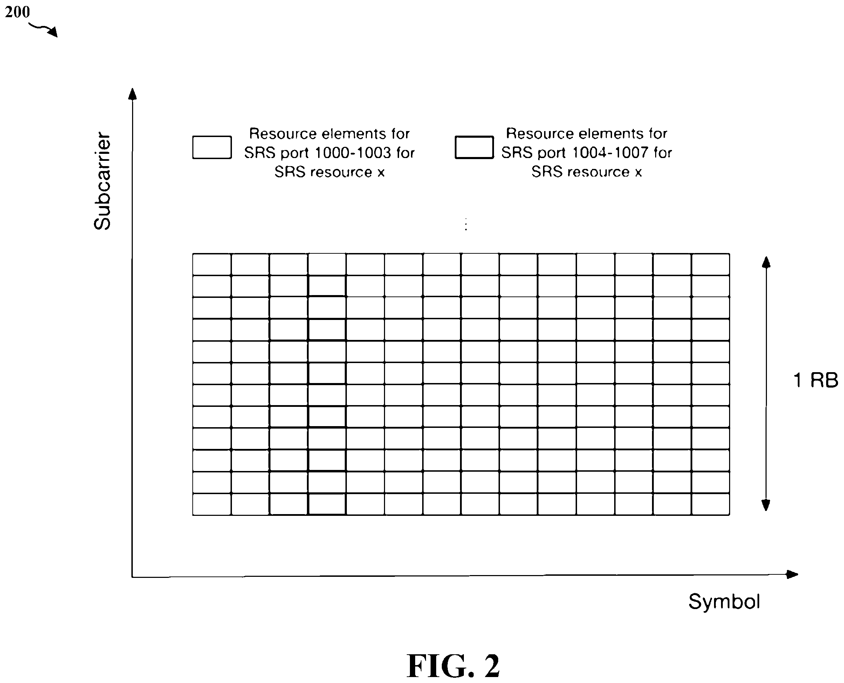

As shown in FIG. 1, the UE 102 may include an SRS management component 140 configured to receive, from the base station 104 an SRS resource configuration for a TDM multi-port SRS transmission in plural symbols and a guideline based on the UE 102's capability and a supported configuration of the UE 102 regarding the TDM multi-port SRS transmission. An example of a TDM based multi-port SRS transmission is illustrated in FIG. 2, which illustrates an example of TDM based multi-port SRS transmission 200 in one resource block (RB) and the resource elements (e.g., the shaded units) of multiple antenna ports (also referred to as SRS ports, such as 1000-1003, and 1004-1007) in two symbols (each symbol carrying four SRS ports as shown).

The SRS management component 140 of the UE 102 may perform at least one of adjusting an SRS transmission power level or preparing the TDM multi-port SRSs transmission in the plural symbols according to the SRS resource configuration and the guideline from the base station 104. The UE 102 may send to the base station 104 the TDM multi-port SRS transmission in the plural symbols, at the adjusted SRS transmission power level, as prepared, or both.

In aspects, the base station 104 or a network entity of the base station 104 may include an SRS configuration component 150 configured to generate a guideline based on the UE 102's capability regarding supported configurations for a TDM multi-port SRS transmission over plural symbols. The SRS configuration component 150 provides the UE 102 (and the base station 104 transmits to the UE 102) an SRS resource configuration for the TDM multi-port SRS transmission in plural symbols, and a guideline for the TDM multi-port SRS transmission. The base station 104 then receives from the UE 102 the TDM multi-port SRS transmission based on the guideline, in the plural symbols.

As such, according to aspects of this disclosure, the SRS management component 140 enables the UE 102 to determine the transmission power for each SRS port in each symbol for an SRS resource with TDM based multi-port transmission operation. This differs from existing practice, according to which the UE 102 is only able to transmit some SRS ports in one symbol and the UE 102 may not be able to achieve full power transmission in one symbol.

For example, the UE 102 can report its capability of power class to the base station 102. The UE 102 may report its maximum transmission power. But when a UE is only configured to transmit the SRS from part of antenna ports, the UE may or may not be able to transmit the SRS with the maximum transmission power according to known standards. Table 1 illustrates one example for uplink full power transmission status of 8-port SRS in 2 symbols for UE power class 3 (maximum transmission power = 23 dBm) with different UE power amplification (PA) architectures, where the UE transmits the first 4 ports in symbol 1 and the other 4 ports in symbol 2.

**Table 1: An example for uplink full power transmission status of 8-port SRS in 2 symbols for UE power class 3 (maximum transmission power = 23 dBm) with different UE PA architectures**

| PA architecture for each port (dBm) | UL full power transmission status |
|---|---|
| [23, 23, 23, 23, 23, 23, 23, 23] | Support full power transmission in both symbol 1 and symbol 2 |
| [14, 14, 14, 14, 14, 14, 14, 14] | Do not support full power transmission in symbol 1 or symbol 2 |
| [20, 20, 20, 20, 14, 14, 14, 14] | Support full power transmission in symbol 1 but do not support full power transmission in symbol 2 |

According to existing technical specifications, the UE must split the linear transmission power calculated from the uplink power control based on the number of configured SRS ports for an SRS resource. As shown in the Table 1 above, however, for SRS with TDM based multi-port transmission, some UEs may be able to transmit the SRS with higher transmission power than the power level resulting from the linear split of the available transmission power. In other words, such UEs may underperform under the existing technical specifications by operating at a reduced power level than a capable power level.

The present disclosure overcomes such limitations by supporting full power transmissions in different types of UE to enable the capable UEs to operate at full or maximum power levels. In some cases, the UE class corresponds to standard or specification specified maximum power levels (e.g., the levels allowed). In some cases, the UE may have hardware configurations that produce a full power level coherent or different from the maximum power level (e.g., either higher or lower). In this disclosure, the "maximum power levels" refer to a specified or allowable power level, while the "full power levels" refer to a highest power level output achievable by the UE.

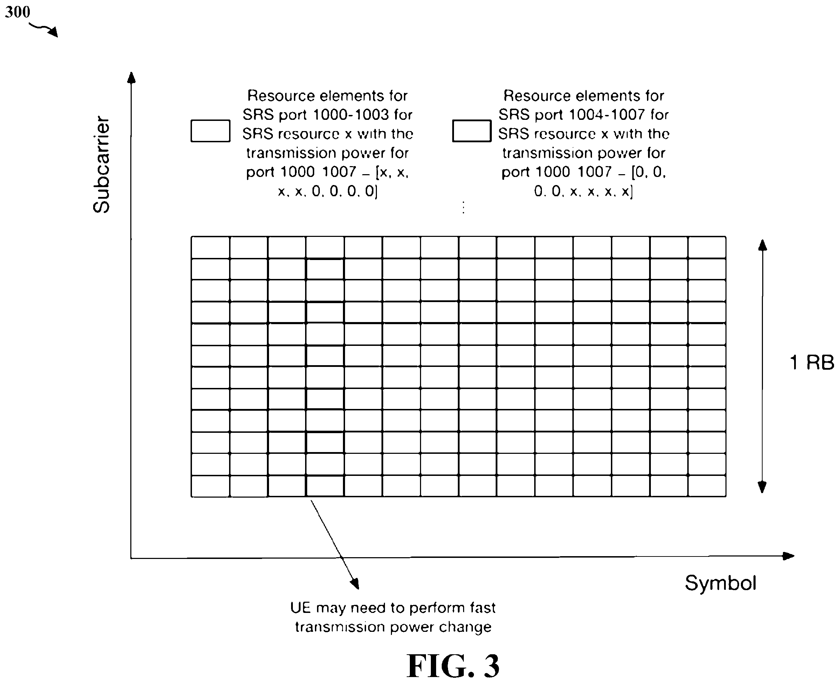

The UE 102 may need a time gap (or a time period) to update the SRS transmission power levels across multiple symbols. That is, the UE 102 is often limited from changing the transmission power levels immediately or quickly under existing standards. For example, FIG. 3 illustrates an example of TDM based multi-port SRS transmission 300 when a fast power change may occur: when the power levels for the SRS ports 1000-1003 are different from the power levels for the SRS ports 1004-1007, the UE may not be capable of fast transmission power change over the two symbols next to each other (per existing or conventional practices). The present disclosure provides methods and techniques that support power level changes in the TDM based multi-port SRS transmission (disregarding the time gap when applicable). In some cases, the disclosed methods may use flexible configuration of comb offset and/or cyclic shift for each symbol to create orthogonal SRS symbols.

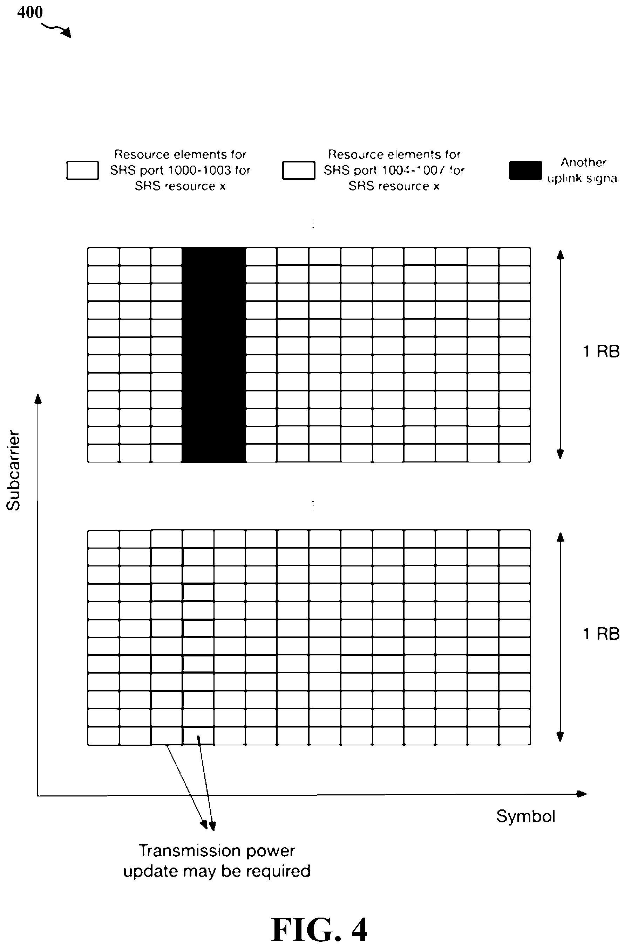

Moreover, the base station 104 may configure the UE 102 to transmit the multi-port SRS simultaneously with some other uplink signals, e.g., physical uplink shared channel (PUSCH), physical uplink control channel (PUCCH), and others, in partially overlapped symbol(s) in a serving cell or in different serving cells, as illustrated in FIG. 4, which illustrates an example of TDM based multi-port SRS transmission 400 when SRS overlaps with other uplink signals and the transmission power level updates. As shown in FIG. 4, the UE needs to transmit another uplink signal that is overlapping with the SRS by one symbol, on SRS ports 1004-1007. As a result, the UE 102 may need to update/change the transmission power for the SRS or the overlapped uplink signal(s). In some cases, the UE 102 may drop one signal as a special case for the transmission power update. The present disclosure provides methods and techniques on transmitting the SRS with TDM based multi-port operation when the SRS overlaps with another uplink signal in a serving cell or in different serving cell(s).

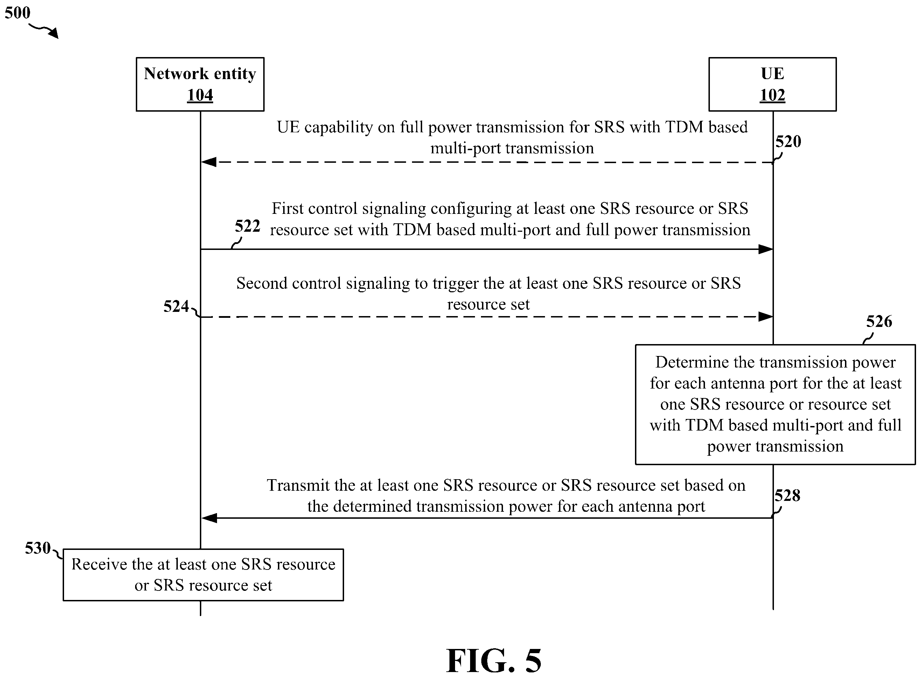

Accordingly, FIG. 1 describes a wireless communication system that may be implemented in connection with various aspects of one or more other figures described herein, such as aspects illustrated in FIGS. 5-27. As further discussed in details below, the present disclosure provides examples for uplink full power transmission for some SRS antenna ports, flexible control signaling for each SRS symbols with regard to fast power update and multiplexing with other SRSs, and uplink transmission power selection or scaling for partial overlapped cases. The disclosed methods may therefore achieve advantageous operations and improve over existing practices.

For example, the SRS with full power transmission increases the coverage of the SRS so that the system performance improves (e.g., signal strength over noise). The flexible control signaling for each SRS symbols with regard to fast power update and multiplexing with other SRSs also reduces the UE's implementation complexity, reducing power consumption. The flexible control signaling may also increase the SRS capacity (e.g., improving the volume and/or signal strength of transmissions). The uplink transmission power selection or scaling for partially overlapped uplink transmission enables the UE to determine the corresponding transmission power for the non-overlapped SRS symbol(s) and overlapped symbol(s). In some cases, the UE may drop the unnecessary signals, so as to reduce the overhead and UE power consumption.

Although the following description may be focused on 5G NR, the concepts described herein may be applicable to other similar areas, such as 5G-Advanced and future versions, LTE, LTE-advanced (LTE-A), and other wireless technologies, such as 6G.

FIG. 5 is an example signaling diagram 500 illustrating signals exchanged by the UE 102 and the network entity 104 for the UE to transmit multi-port SRS using the UE's full available power. As shown, the UE 102 reports 520 the UE capability on full power transmission for SRS with TDM based multi-port transmission. For example, the UE 102 tells the network entity 104 whether the UE 102 supports full power uplink transmission for an SRS resource with TDM based multi-port transmission. In some cases, the UE 102 may also report 520 the capability on the supported configuration, e.g., (maximum) number of ports per symbol, and whether the UE 102 supports uplink full power transmission.

In some implementations, the UE sending the capability report is optional. The network entity 104 may receive information on the one or more capabilities from a core network (e.g., Access and Mobility Management Function (AMF)). In yet some implementations, the network entity 104 receives the one or more capabilities from another base station (e.g., gNB or eNB). Based on the one or more capabilities, the network entity 104 may configure at least one SRS resource in one SRS resource set with TDM multi-port and/or full power transmission using a first control signaling. For example, the network entity 104 transmits 522 a first control signaling that configures at least one SRS resource or an SRS resource set for transmitting TDM based multi-port using full power transmission. The first control signaling may be part of a radio resource control (RRC) message, e.g., *RRCReconfiguration.*

In some implementations, the network entity 104 may transmit 524 a second control signaling to activate or trigger using/monitoring the at least one SRS resource or SRS resource set. For example, for semi-persistent SRS, the network entity 104 may transmit a media access control (MAC) control element (CE) as the second control signaling. For aperiodic SRS, the network entity 104 may transmit a downlink control information (DCI) as the second control signaling.

The UE 102 determines 526 the transmission power for each antenna port based on the received configuration on full power transmission from the first control signaling. For example, the UE 102 determines the power level for each antenna port and each symbol so as to use a maximum achievable power level based on the power amplification architecture, the power class, and other capability information; the UE avoids limiting or reducing the power level per port, per symbol, or both for the multi-port SRS transmission when the UE 102 is capable of transmitting using full power.

The UE 102 transmits 528 the at least one SRS resource or SRS resource set based on the determined transmission power for each antenna port. The network entity 104 receives 530 the at least one SRS resource or SRS resource set.

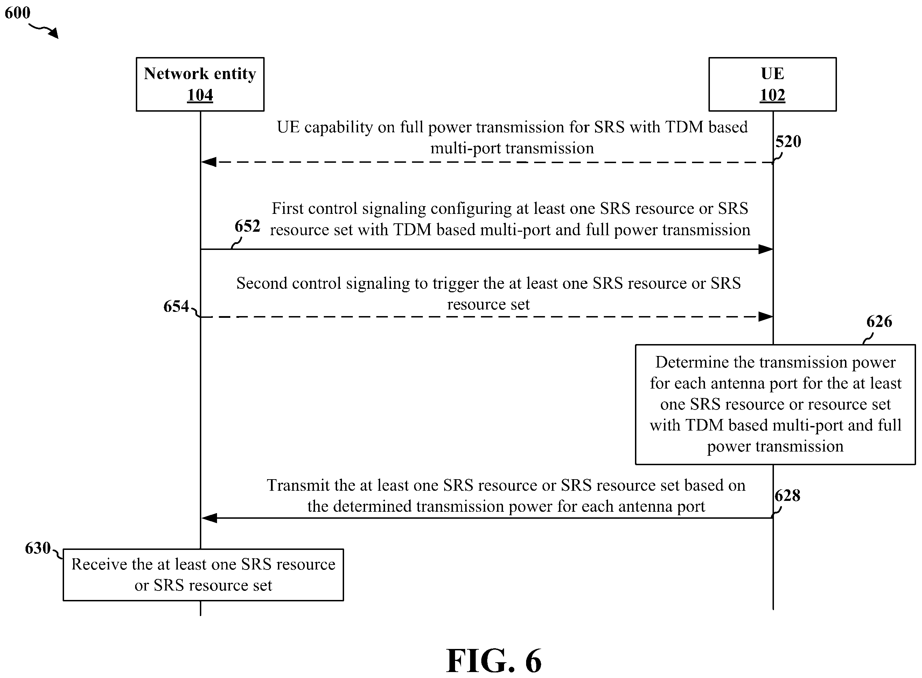

FIG. 6 illustrates an example signaling diagram 600 between the UE 102 and the network entity 104 for full power multi-port SRS transmission as indicated by the network entity 104, in accordance with aspects of this disclosure. As illustrated in the diagram 600, one difference in comparison with FIG. 5 is that the base station 104 of FIG. 6 transmits 654 full power related configuration in the second control signaling, after transmitting 652 the first control signaling. In response, the UE 102 determines 626 the transmission power for each antenna port for the at least one SRS resource or resource set with TDM based multi-port and full power transmission. The UE 102 then transmits 628 the at least one SRS resource or SRS resource set based on the determined transmission power for each antenna port. The base station 104 receives 630 the at least one SRS resource or SRS resource set.

The first control signaling 520 of both the diagrams 500 and 600 may be part of an RRC message (e.g., an RRC reconfiguration message), or a system information block (SIB). The SIB can be an existing SIB (e.g., SIB1) or a new SIB (e.g., SIB J, where *J* is an integer above 21) transmitted by the network entity 104.

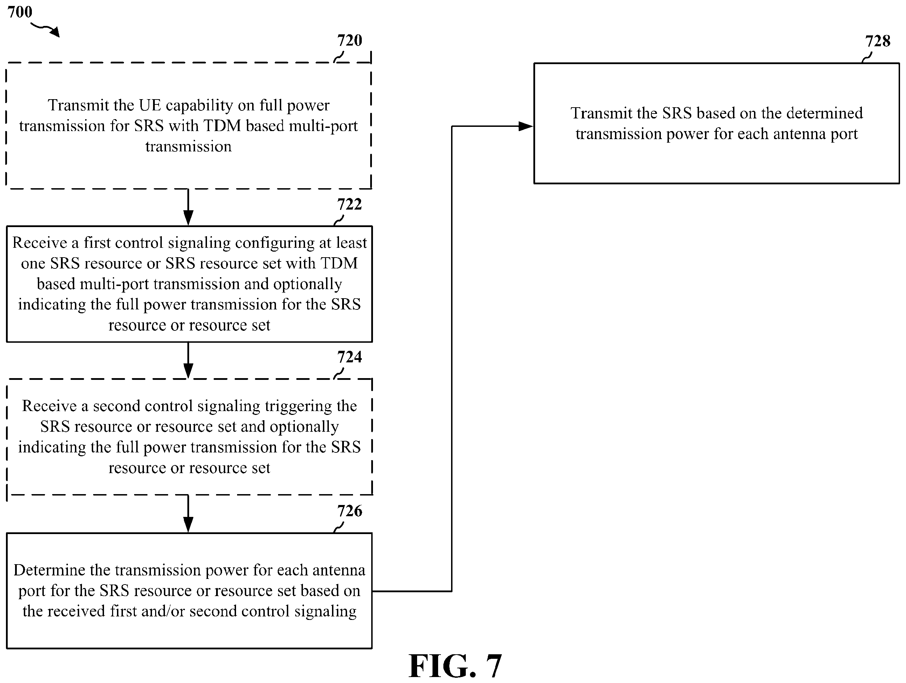

FIG. 7 is a flowchart of a method 700 of wireless communications performed by a UE for full power multi-port SRS transmission, the method corresponding to the signaling diagrams 500 and 600 of FIGS. 5 and 6. As shown, the UE optionally transmits 720 the UE capability on full power transmission for SRS with TDM based multi-port transmission to the network entity. The UE then receives 722 a first control signaling that configures an SRS resource or an SRS resource set to be used for TDM based multi-port transmission. The first control signaling may optionally indicate the full power transmission for the SRS resource or resource set.

The UE then optionally receives 724 a second control signaling that triggers the SRS resource or resource set. The second control signaling may optionally indicate the full power transmission for the SRS resource or resource set. The UE determines 726 the transmission power for each antenna port for the SRS resource or resource set based on the received first and/or second control signaling. The UE transmits 728 the multi-port SRS based on the determined transmission power for each antenna port.

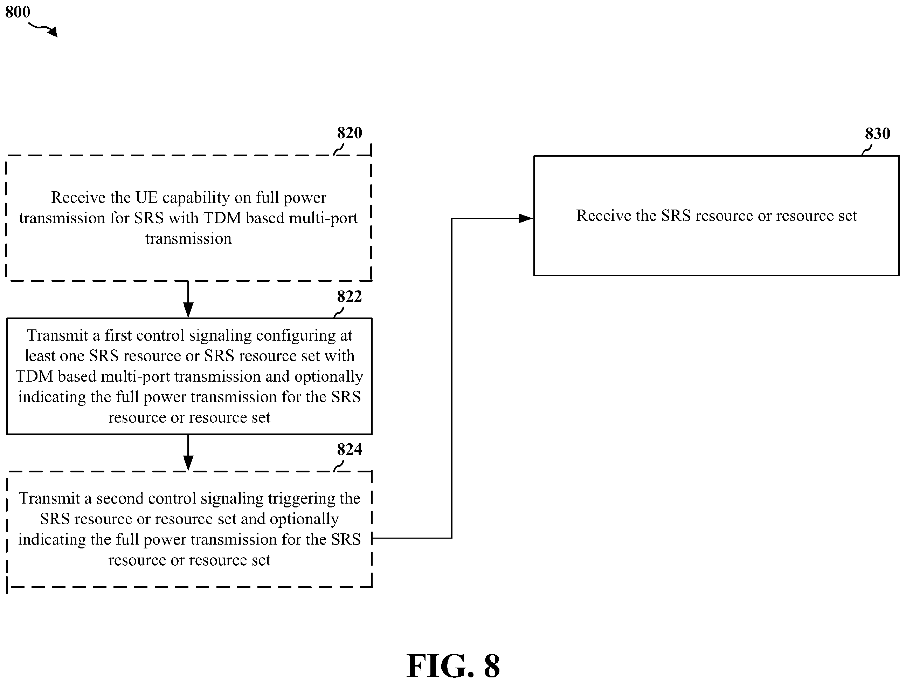

FIG. 8 is a flowchart of a method 800 of wireless communications performed by a network entity for full power multi-port SRS transmission, in accordance with aspects of this disclosure. The network entity 104 may perform the method 800, complementary to the method 700 by the UE 102. As shown, the network entity 104 optionally receives 820 the UE capability on full power transmission for SRS with TDM based multi-port transmission. The network entity 104 transmits 822 a first control signaling that configures an SRS resource or an SRS resource set to be used for TDM based multi-port transmission. The first control signaling may optionally indicate the full power transmission for the configured SRS resource or resource set.

The network entity 104 optionally transmits 824 a second control signaling for triggering the UE to use the SRS resource or resource set. The second control signaling optionally indicates the full power transmission for the SRS resource or resource set. The network entity 104 receives 830 the SRS resource or resource set from the UE 102.

Referring to both methods 700 and 800, in an embodiment, the UE capability indicates whether the UE 102 is capable of transmitting an SRS with TDM transmission with full power or with the supported maximum power scaling factor. For example, the UE 102 may transmit 720 the capability of supporting N antenna ports, e.g., N=8, SRS with TDM based transmission and the support of transmitting such SRS with full power in each symbol. In some cases, the UE 102 may report the UE capability per (e.g., for every) feature set, per band, per band combination, or per UE (e.g., applicable to this UE 102 regardless feature set, band, or band combination).

In an embodiment, the UE 102 transmits 720 a UE capability indicating whether the UE is capable of transmitting a SRS with full power or the supported maximum power scaling factor for each configuration of TDM based multi-port (e.g., a number of antenna ports per symbol) transmission. For example, the UE 102 may transmit three parameters or a 3-bit bitmap indicating the full power transmission capability for the case of {1, 2, 4} antenna ports per symbol based TDM multiplexing. The UE may transmit 720 the capability of supporting N ports (e.g., N=8) SRS with TDM based transmission and the full power related capability for each usage, e.g., codebook, beam management, or antenna switching, or across usages. Similar to above, the UE 102 may report such UE capability per feature set, per band, per band combination, or per UE.

In an embodiment, the UE 102 transmits 720 a UE capability indicating whether the UE is capable of transmitting a SRS with full power or the supported maximum power scaling factor for each symbol based on each configuration of TDM based multi-port transmission, e.g., full power status for each configuration of number of antenna ports per symbol. For example, when the UE 102 supports 8 ports SRS with TDM operation, the UE 102 may transmit three parameter or parameter sets indicating the full power transmission capability for the case of {1, 2, 4} ports per symbol based TDM multiplexing.

In the first parameter or parameter set, the UE 102 may transmit an 8-bit bitmap indicating the full power status for each symbol for the case of one port per symbol over eight symbols. In the second parameter or parameter set, the UE 102 may transmit a 4-bit bitmap indicating the full power status for each symbol for the case of two ports per symbol over four symbols. In the third parameter or parameter set, the UE 102 may transmit a 2-bit bitmap indicating the full power status for each symbol for the case of four ports per symbol over two symbols.

The UE 102 may transmit the capability of supporting N ports (e.g., N=8) SRS with TDM based transmission and the full power related capability for each usage, e.g., codebook, beam management, antenna switching, or across usages. The UE 102 may report the UE capability per feature set, per band, per band combination, or per UE.

In an embodiment, the UE 102 receives an indication of full power transmission port or port combination. For example, the UE 102 transmits 720 a UE capability indicating whether the UE 102 is capable of transmitting SRS with full power or the supported maximum power scaling factor for a port or port combination(s) or port combination group, e.g., full power status for some SRS ports. The UE 102 may report the UE capability for PUSCH port since the PUSCH and SRS share the same port index(es). For example, when the UE 102 supports transmitting 8-ports SRS, the UE 102 may transmit N parameters indicating the full power transmission status for N SRS port combinations groups. The SRS port combinations groups may be predefined including at least one of the port combinations below:
Group 1: Any port combinations including port {1000}
Group 2: Any port combinations including port {1001}
Group 3: Any port combinations including port {1002}
Group 4: Any port combinations including port {1003}
Group 5: Any port combinations including port {1004}
Group 6: Any port combinations including port {1005}
Group 7: Any port combinations including port {1006}
Group 8: Any port combinations including port {1007}
Group 9: Any port combinations including port {1000, 1001}
Group 10: Any port combinations including ports {1002, 1003}
Group 11: Any port combinations including ports {1004, 1005}
Group 12: Any port combinations including ports {1006, 1007}
Group 13: Any port combinations including ports {1000, 1001, 1002, 1003}
Group 14: Any port combinations including ports {1004, 1005, 1006, 1007}

When one or more groups from the above include at least one port with the same number, the UE 102 may use one of the groups to determine the full power transmission status. For example, the group with the largest group index among the one or more groups may be used. In some cases, the UE 102 may transmit the capability of supporting N ports (e.g., N=8) SRS with TDM based transmission and the full power related capability for each usage, e.g., codebook, beam management or antenna switching, or across usages. The UE may report the UE capability per feature set, per band, per band combination, or per UE.

In an embodiment, the UE the UE 102 transmits 720 a UE capability for an SRS/PUSCH full power transmission mode capability report. For example, the UE 102 transmits 720 a UE capability indicating the UE capability of supported uplink full power transmission mode for PUSCH and SRS for each number of configured SRS ports (e.g., 2, 4, 8 ports).

In some implementations, for uplink full power transmission for PUSCH associated with different number of indicated SRS ports, e.g., 2, 4, 8 port, the UE 102 may report the supported uplink full power mode, e.g., mode 0 (PUSCH transmission with RRC parameter *ul-FullPwrMode* configured), mode 1 (PUSCH transmission with RRC parameter *ul-FullPwrModel* configured) and mode 2 (PUSCH transmission with RRC parameter *ul-FullPwrMode2-SRSConfig-diffNumSRSPorts* and/or *ul-FullPwrMode2-TPMIGroup* configured). The UE 102 may report the same supported uplink full power mode or different supported uplink full power modes for different number of indicated SRS ports, e.g., 2, 4, 8 ports.

The uplink full power mode 0 for X SRS/PUSCH ports indicates the UE 102 is able to support full power transmission for any port of an SRS resource configured with X ports or PUSCH associated with an SRS resource configured with X ports. The uplink full power mode 1 for X SRS/PUSCH ports indicates the UE is only able to support full power transmission when the UE transmits non-zero-power (NZP) uplink signal from all the X ports from an SRS resource configured with X ports or PUSCH associated with an SRS resource configured with X ports. The uplink full power mode 2 for X SRS/PUSCH ports indicates the UE is able to support full power transmission when the UE transmits non-zero-power (NZP) uplink signal from a subset of Y (Y<X) ports or all the X ports from an SRS resource configured with X ports or PUSCH associated with an SRS resource configured with X ports, where the UE may report the at least a set of Y ports based on a supported full power precoders, e.g., *ul-FullPwrMode2-TPMIGroup.*

When the network entity 104 transmits 722 or 822 the first control signaling to the UE 102, the network entity 104 may use radio resource control (RRC), media access control (MAC) control element (CE), or downlink control information (DCI).

When the network entity 104 configures the SRS resource or resource set using RRC signaling (e.g., *RRCReconfiguration),* the RRC signaling may configure the uplink full power transmission indication for an SRS symbol of an SRS resource (where the SRS resource may include one or more symbols) or an SRS resource or an SRS resource set. In some implementations, the network entity 104 may configure an indicator to enable or disable the uplink full power. In some implementations, the network entity 104 may configure a power scaling factor for each antenna port. The range of the scaling factor is determined based on the number of ports per SRS resource X and number of ports per symbol Y, which can be in the range of [1/X, 1/Y]. In some implementations, the network entity 104 may configure the uplink full power transmission mode, e.g., mode 0, mode 1 or mode 2, for an SRS resource or resource set or PUSCH associated with an SRS resource for each number of ports, e.g., 2, 4, 8 ports.

In an example, the network entity 104 may configure a bitmap in an SRS resource indicating whether to enable or disable the uplink full power for the symbols of the SRS resource. The first state in bit x indicates enabling the uplink full power for symbol x of the SRS resource and the second state in bit x indicates disabling the uplink full power for symbol x of the SRS resource. The absence of the bitmap indicates disabling of the uplink full power for every symbol of the SRS resource.

In another example, the network entity 104 may configure an RRC parameter in an SRS resource indicating whether to enable or disable the uplink full power for every symbol of the SRS resource. Alternatively, the network entity 104 may configure an RRC parameter in an SRS resource indicating enabling of the uplink full power for every symbol of the SRS resource. The absence of the RRC parameter indicates disabling of the uplink full power for every symbol of the SRS resource.

In another example, the network entity 104 may configure an RRC parameter in an SRS resource set indicating whether to enable or disable the uplink full power for every SRS resource in the SRS resource set. Alternatively, the network entity 104 may configure an RRC parameter in an SRS resource set indicating enabling of the uplink full power for every SRS resource in the SRS resource set. The absence of the RRC parameter indicates disabling of the uplink full power for every SRS resource in the SRS resource set.

When the network entity 104 configures the SRS resource or resource set using MAC CE signaling, the MAC CE configures or indicates the uplink full power transmission indication for an SRS symbol or an SRS resource or an SRS resource set. In some implementations, the network entity 104 may configure an indicator to enable or disable the uplink full power. In some implementations, the network entity 104 may configure a power scaling factor for each antenna port. The range of the scaling factor is determined based on the number of ports per SRS resource X and number of ports per symbol Y, which can be in the range of [1/X, 1/Y]. In some implementations, the network entity 104 may configure the uplink full power transmission mode, e.g., mode 0, mode 1 or mode 2, for an SRS resource or resource set or PUSCH associated with an SRS resource for each number of ports, e.g., 2, 4, 8 ports.

In some implementations, the network entity 104 may configure or indicate the uplink full power transmission indication by the MAC CE used to activate the SRS resource set, e.g., semi-persistent SRS resource set. In the MAC CE, the network entity 104 may transmit the full power transmission indicator or power scaling factor per SRS symbol or per SRS resource or per SRS resource set for the activated SRS resource set.

In some implementations, the network entity 104 may configure or indicate the uplink full power transmission indication by a dedicated MAC CE. In this MAC CE, the network entity 104 may indicate at least one of the elements: serving cell index, bandwidth part index, field indicating SUL or NUL, SRS resource set index, SRS resource index, SRS symbol index and full power indicator or power scaling factor.

When the network entity 104 configures the SRS resource or resource set using DCI, the DCI configures or indicates the uplink full power transmission indication for an SRS symbol or an SRS resource or an SRS resource. In some implementations, the network entity 104 may configure an indicator to enable or disable the uplink full power. In some implementations, the network entity 104 may configure or indicate a power scaling factor for each antenna port. The range of the scaling factor is determined based on the number of ports per SRS resource X and number of ports per symbol Y, which can be in the range of [1/X, 1/Y]. In some implementations, the network entity 104 may configure the uplink full power transmission mode, e.g., mode 0, mode 1 or mode 2, for an SRS resource or resource set or PUSCH associated with an SRS resource for each number of ports, e.g., 2, 4, 8 ports.

In some implementations, the network entity 104 may configure the uplink full power transmission indication by the DCI used to trigger the SRS resource set, e.g., aperiodic SRS resource set. In the DCI, the network entity 104 may transmit the full power transmission indicator or power scaling factor per SRS symbol or per SRS resource or per SRS resource set for the triggered SRS resource set.

In some implementations, the network entity 104 may configure the uplink full power transmission indication by a dedicated DCI. The gNB may transmit the DCI based on cell-specific radio network temporary identifier (C-RNTI) or a dedicated RNTI configured by the network entity 104 by RRC signaling or predefined. In this DCI, the network entity 104 may indicate at least one of the elements: serving cell index, bandwidth part index, field indicating SUL or NUL, SRS resource set index, SRS resource index, SRS symbol index and full power indicator or power scaling factor.

In an embodiment, the UE 102 may determine 726 the transmission power for a symbol based on uplink power control related parameters configured by RRC signaling and split the determined linear transmission power for each antenna port by a full power scaling factor.

In some implementations, the UE receives 722 or 724 an indicator from the first or the second control signaling enabling the full power transmission, then the UE splits the determined transmission power based on the number of configured/indicated ports for the symbol. In one example, if 4 ports are configured/indicated and the full power is enabled, the UE calculates the transmission power for each configured antenna port by splitting the linear transmission power by 1/4.

In some implementations, the UE receives a scaling factor from the first or the second control signaling enabling the full power transmission, then the UE splits the determined transmission power based on scaling factor. In one example, if 4 ports are configured/indicated and scaling factor is configured as 1/4, the UE calculates the transmission power for each configured antenna port by splitting the linear transmission power by 1/4.

In an embodiment, the UE may determine 726 the transmission power for an SRS resource based on uplink power control related parameters configured by RRC signaling and split the determined linear transmission power for each antenna port by a full power scaling factor.

In some implementations, the UE receives 722 or 724 an indicator from the first or the second control signaling enabling the full power transmission, then the UE splits the determined transmission power for the symbols in the SRS resource based on the number of configured/indicated ports for each of the symbols. Then the UE determines the transmission power for each antenna port for the symbols in the SRS resource based on the maximum or minimum or average transmission across the symbols. In one example, if 4 ports are configured and the full power is enabled for the first symbol but disabled for the second symbol, the UE calculates the transmission power for each configured antenna port for the first symbol by splitting the linear transmission power by 1/4 and calculates the transmission power for the each configured antenna port for the second symbol by splitting the linear transmission power by 1/8. Then the UE may select the transmission power for the two symbols based on the minimum transmission power with the power scaling factor as 1/8.

In some implementations, the UE receives 722 or 724 a scaling factor from the first or the second control signaling enabling the full power transmission, then the UE splits the determined transmission power based on scaling factor. If the power scaling factor is different for different symbols, the UE determines the transmission power for each antenna port for the symbols in the SRS resource based on the maximum or minimum or average transmission across the symbols. In one example, if 4 ports are configured and scaling factor is configured as 1/4 for the first symbol and 1/8 for the second symbol, the UE calculates the transmission power for each configured antenna port by splitting the linear transmission power by 1/8.

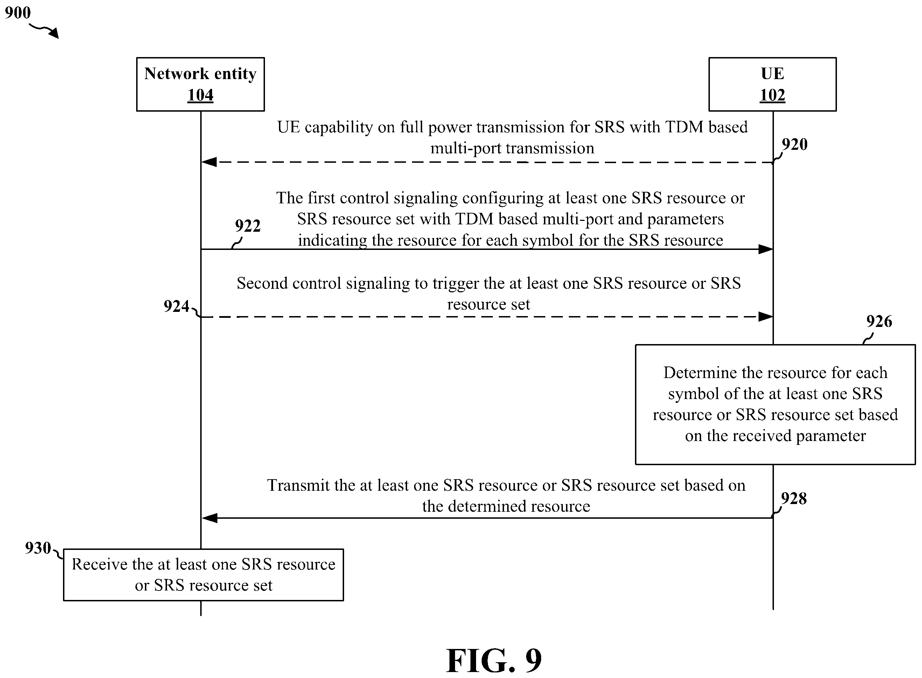

FIG. 9 illustrates an example signaling diagram 900 between the UE 102 and the network entity 104 for multi-port SRS transmission as the UE 102 determines the resource for each symbol of the SRS, in accordance with aspects of this disclosure. As shown, the signaling diagram 900 provides flexible configuration for SRS with TDM based multi-port transmission. For example, the UE 102 reports 920 the UE capability on supported configurations of TDM based multi-port transmission. In some implementations, the network entity 104 receives the one or more capabilities from a core network (e.g., Access and Mobility Management Function (AMF)). In yet some implementations, the network entity 104 receives the one or more capabilities from another base station (e.g., gNB or eNB).

Based on the one or more capabilities, the network entity 104 may configure at least one SRS resource in one SRS resource set with TDM based multi-port transmission and the resource for each SRS symbol. In some implementations, the network entity 104 transmits 922 a first control signaling by RRC signaling, e.g., *RRCReconfiguration* to configure the parameters indicating the resources for each symbol for the at least one SRS resource or SRS resource set. The gNB may transmit 924 a second control signaling, e.g., MAC CE or DCI, to trigger or activate the configured at least one SRS resource or resource set. The UE may determine 926 the resource for each SRS symbol (e.g., how the multi-port SRS is repeated or multiplexed) based on the received parameters in the first control signaling and transmit the SRS at determined resource. The UE 102 transmits 928 the at least one SRS resource or SRS resource set based on the determined resource. The network entity 104 receives 930 the at least SRS resource or resource set.

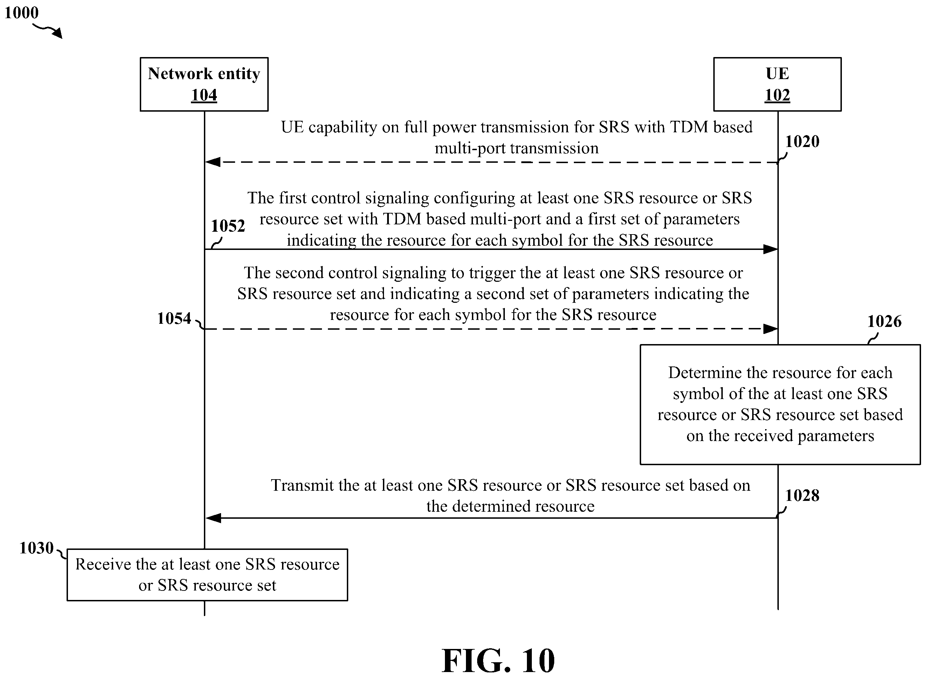

FIG. 10 illustrates an example signaling diagram 1000 between the UE 102 and the network entity 104 for multi-port SRS transmission as the resource for each symbol of the SRS indicated by the network entity, in accordance with aspects of this disclosure. The signaling diagram 1000 illustrates another alternative procedure for flexible configuration for SRS with TDM based multi-port transmission. Similar to the signaling diagram 900, in FIG. 10, the UE 102 optionally transmits 1020 the UE capability on full power transmission for SRS with TDM based multi-port transmission.

The difference between the signaling diagrams 900 and 1000 includes that in the signaling diagram 900, the network entity 104 may transmit 922 a first set of parameters in the first control signaling and transmits 924 the second control signaling triggering the SRS resource or resource set, while in the signaling diagram 1000 the network entity 104 transmits 1054 a second set of parameters in the second control signaling, e.g., MAC CE or DCI to indicate the resource for each symbol for the SRS resource, in addition to triggering, after transmitting 1052 the first control signaling.

The UE 102 determines 1026 the resource for each symbol of the at least one SRS resource or SRS resource set based on the received parameters (e.g., the first set of parameters of the first control signaling and the second set of parameters of the second control signaling). The UE 102 transmits 1028 the at least one SRS resource or SRS resource set based on the determined resource. The network entity 104 receives 1030 the at least one SRS resource or SRS resource set.

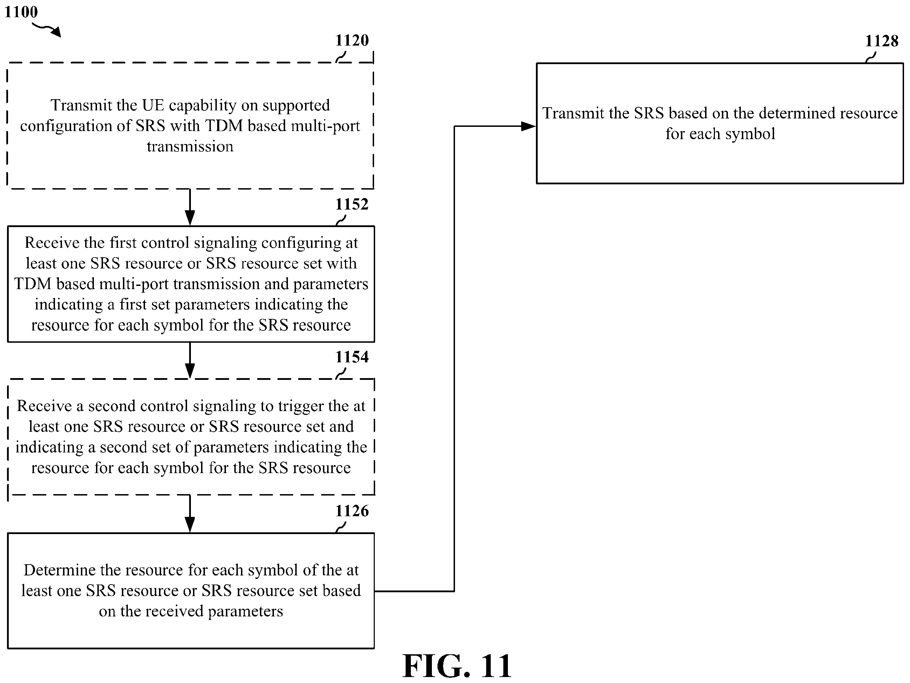

FIG. 11 is a flowchart of a method 1100 of wireless communications by a UE for multi-port SRS transmission, in accordance with aspects of this disclosure. The method 1100 illustrates the UE 102's behavior in cyclic shift hopping based SRS transmission, corresponding to the signaling diagram 1000 of FIG. 10. As shown, the UE 102 optionally transmits 1120 the UE capability on supported configuration of SRS with TDM based multi-port transmission. The UE 102 receives 1152 the first control signaling configuring at least one SRS resource or SRS resource set with TDM based multi-port transmission and parameters indicating a first set of parameters that indicate the resource for each symbol for the SRS resource.

The UE 102 optionally receives 1154 a second control signaling to trigger the at least one SRS resource or SRS resource set. The second control signaling may indicate a second set of parameters (e.g., the network entity 104 transmits 1054 the second control signaling in FIG. 10). The UE 102 determines 1126 the resources (e.g., the SRS resource in symbols and subcarriers for each antenna port) for each symbol of the at least one SRS resource or SRS resource set based on the received parameters. The UE 102 transmits 1128 the SRS based on the determined resource for each symbol.

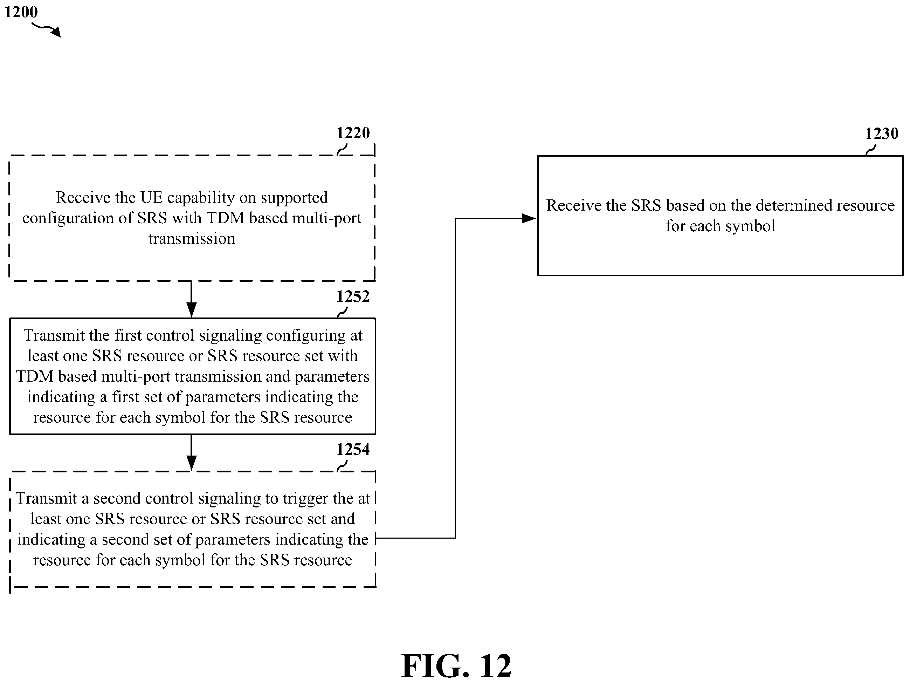

FIG. 12 is a flowchart of a method 1200 of wireless communications by a network entity for multi-port SRS transmission, in accordance with aspects of this disclosure. As shown, the method 1200 is complementary to the method 1100 and describes the behavior of the network entity 104 for cyclic shift hopping based SRS configuration and reception, corresponding to the operations in FIG. 10. The network entity 104 optionally receives 1220 the UE capability on supported configuration of SRS with TDM based multi-port transmission. The network entity 104 transmits 1252 the first control signaling to configure at least one SRS resource or SRS resource set with TDM based multi-port transmission. The first control signaling includes parameters or values that further indicate (e.g., by using a first set of a parameters) the resource for each symbol for the SRS resource.

The network entity 104 optionally transmits 1254 a second control signaling to trigger the at least one SRS resource or SRS resource set. The second control signaling may indicate a second set of parameters that indicate the resource for each symbol for the SRS resource. The network entity 104 receives 1230 the SRS based on the UE-determined resource for each symbol. Referring to both methods 1100 and 1200, detail examples are discussed below.

In an embodiment related to reporting the UE's capability of flexible configuration, the UE 102 transmits 1120 a UE capability indicating the supported configurations for SRS with TDM based multi-port transmission, indicating that the UE 102 supports the SRS with TDM based multi-port transmission. In some implementations, the UE transmits 1120 the UE capability indicating the supported configurations, e.g., number of ports per symbol and number of symbols, for SRS with TDM based multi-port transmission.

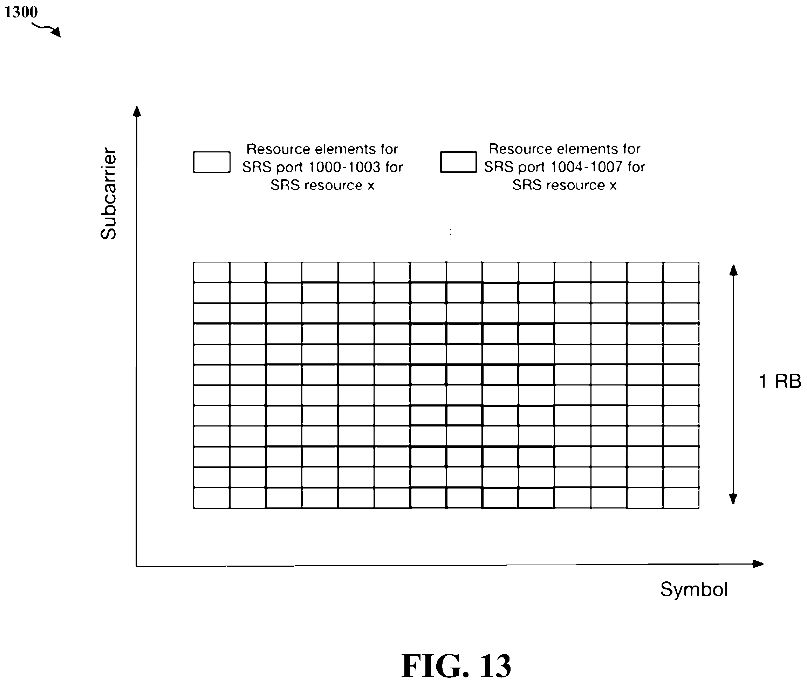

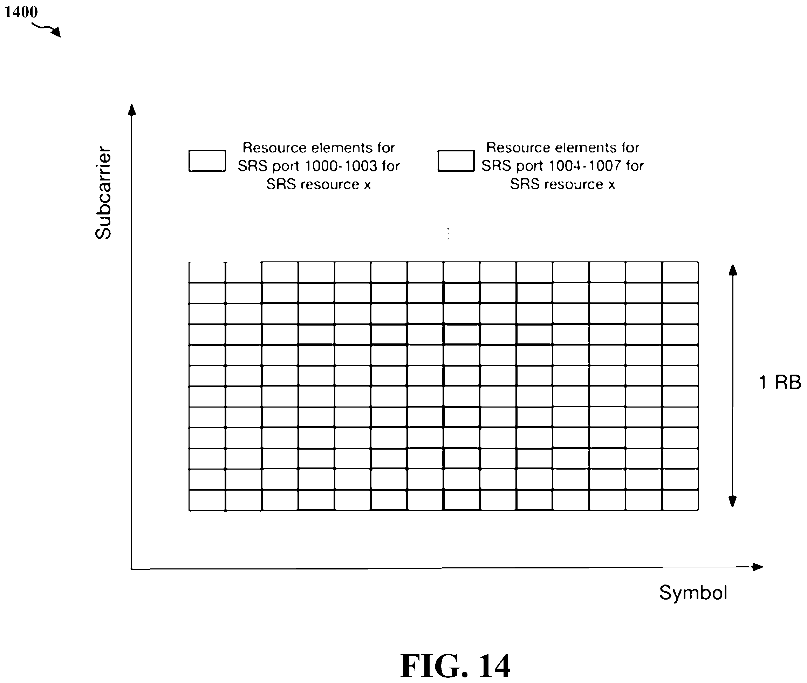

For example, the UE 102 may transmit a UE capability indicating that the UE 102 supports 8-ports SRS in two symbols with four ports per symbol. In some implementations, the UE may further transmit the UE capability on whether the UE 102 supports both repetition and TDM based multiplexing for an SRS resource. The UE 102 may further transmit the UE capability on the supported repetition mode, e.g., repetition first (an example illustrated in FIG. 13) or TDM based multiplexing first (an example illustrated in FIG. 14). In some implementations, the UE 102 may further transmit the UE capability on a minimum gap between the symbols with different SRS ports with regard to fast power update.

In an embodiment related to the first and the second control signaling for flexible SRS resource configuration (e.g., upon receiving the UE's capability), the network entity 104 may configure repetitions, TDM based multiplexing, or both, for an SRS resource. The network entity 104 may further configure the repetition mode, e.g., repetition first or TDM based multiplexing first. For the mode of repetition first, the UE 102 transmits the symbols with the same ports repeatedly first, and then the symbols with other ports. For the mode of TDM based multiplexing first, the UE 102 transmits the symbols from different ports first and then transmit such symbols repeatedly.

In some implementations, the network entity 104 may configure the port index(es) for each symbol. In some implementations, the network entity 104 may configure the number of ports per symbol, indicate number of symbols for a multiplexing group and total number of symbols for the SRS resource. For example, for an 8-ports transmission over 2 symbols, the network entity 104 may configure that the number of ports per symbol is four and the number of symbols for a multiplexing group is two. The network entity 104 may configure R repetitions by setting a total number of symbols for the SRS resource as *2R.* In some implementations, the network entity 104 may configure the starting position for each repetition separately, and the symbols in each repetition are from the same antenna ports.

FIG. 13 illustrates an example 1300 of multi-port SRS transmission having a repetition priority based operation, in accordance with aspects of this disclosure. As shown, the illustrated SRS resource is based on the mode of repetition first with eight ports multiplexed in two symbols with four repetitions. That is, the resource elements for the SRS ports 1000-1003 for the SRS resource are repeated four times, before multiplexing with the resource elements for the SRS ports 1004-1007.

FIG. 14 illustrates another example 1400 for multiplexing first based operation with eight ports multiplexed in two symbols with four repetitions. As shown, the illustrated SRS resource is based on the mode of TDM multiplexing first such that the resource elements for the SRS ports 1000-1003 are first multiplexed with the resource elements for the SRS ports 1004-1007 (e.g., in adjacent symbols) and then repeated four times.

In some cases, the UE 102 may determine which mode to use based on whether the UE is capable of updating power levels in two adjacent symbols. For example, the UE 102 may determine to use the mode of repetition first when the UE is not capable of updating the power levels in two adjacent symbols. In some cases, the network entity 104 indicates (via the parameters in the first and/or second control signaling) to the UE which mode the UE 102 is to use but allows the UE to determine transmission power levels. For example, the UE 102 may determine using full power transmission when capable in the indicated mode (repetition first or multiplexing first).

In an embodiment, the network entity 104 may refrain from configuring both repetition and TDM based multiplexing for an SRS resource. The network entity 104 may configure the number of the ports per symbol and whether the symbols for an SRS resource are from the same port(s) or not. If the symbols are from the same port(s), the UE may transmit the SRS resource based on repetition mode; otherwise, the UE 102 may transmit the SRS resource based on TDM based multi-port transmission.

In an embodiment, for TDM based multi-port transmission, the network entity 104 may configure the gap between the symbols with different ports of an SRS resource. In some implementations, the network entity 104 may configure an offset between the symbols with different ports in an SRS resource or an SRS resource set. The offset may be configured in the unit of symbols, e.g., one symbol. In some implementations, the network entity 104 may configure an indicator to enable the offset, where the duration for the offset is predefined per subcarrier spacing or across subcarrier spacing, e.g., one symbol, or based on the UE capability reported by the UE. In such implementations, the concerned subcarrier spacing(s) may be the subcarrier spacing(s) in the bandwidth part (BWP) or carrier component (CC) where the SRS resource is transmitted. In such implementations, alternatively, the concerned subcarrier spacing(s) may be the subcarrier spacing(s) in one or more BWP(s)/CC(s) in a CC list. In some implementations, the network entity 104 may configure the symbol index for each symbol.

In an embodiment, for TDM based multi-port transmission, the network entity 104 may configure the comb offset and/or cyclic shift for the symbols from different ports separately. In some implementations, the network entity 104 configures separate parameters indicating the comb offset and/or cyclic shift for the symbols from different ports separately. In some implementations, the network entity 104 configures a set of parameters indicating the comb offset and/or cyclic shift for the symbols from a first set of ports, and configures another set of parameters indicating the offset of the comb and/or cyclic shift for the symbols from a second set of ports. In some implementations, the network entity 104 configures a set of parameters indicating the comb offset and/or cyclic shift for the symbols from the first set of ports, and configures a parameter indicating whether the comb offset and/or cyclic shift for the symbols from the second set of ports may be the same or not. If the parameter indicates different comb offset and/or cyclic shift may be applied, the comb offset and/or cyclic shift can be determined based on the comb offset and/or cyclic shift configured for the first set of ports and the port index for the second set of ports.

In an embodiment, the network entity 104 may transmit the parameters above by the first control signaling. In an embodiment, the network entity 104 may transmit the parameters above by the second control signaling. In an embodiment, the network entity 104 may transmit some of the parameters above by the first control signaling, and the remaining parameters above by the second control signaling. In an embodiment, some of the parameters above may be predefined.

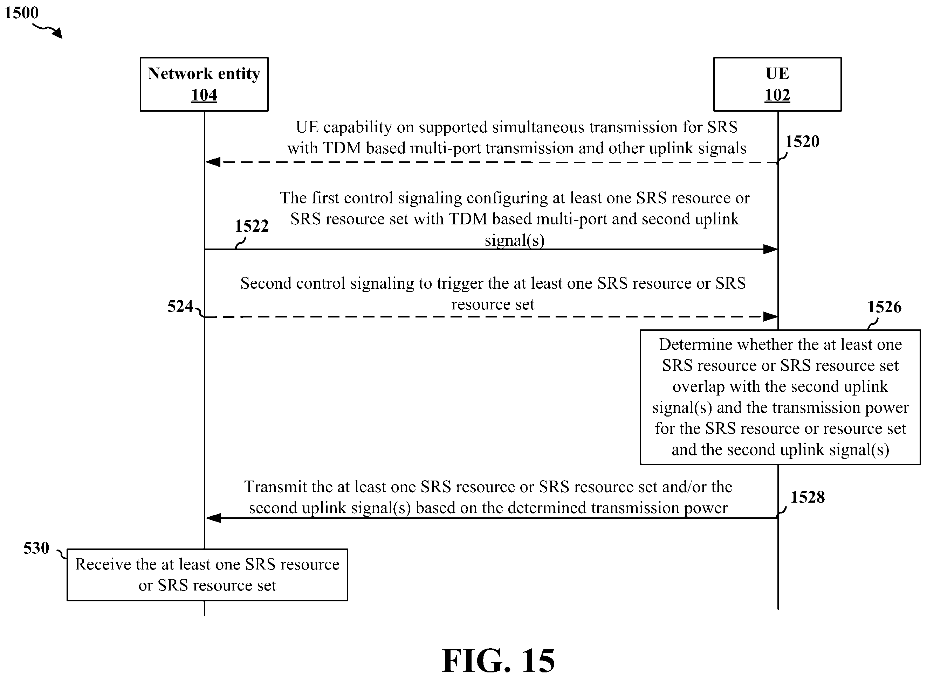

FIG. 15 illustrates an example signaling diagram 1500 between the UE 102 and the network entity 104 for multi-port SRS transmission overlapping with a second uplink signal, in accordance with aspects of this disclosure. As shown, the signaling diagram 1500 illustrates a procedure for SRS transmission power scaling when the multi-port SRS transmission is at least partially overlapping or colliding with a second uplink signal(s). For example, the UE 102 may accommodate the power levels for transmitting, per symbol, both the SRS and the second uplink signal by changing (e.g., scaling down, dropping, or scaling up) one or both the power levels of the SRS and the second uplink signal.

As shown in FIG. 15, the UE 102 optionally reports 1520 one or more capabilities on whether the UE 102 supports simultaneous transmission of the SRS with TDM based multi-port transmission and a second uplink signal(s). The second uplink signal may include a PUSCH, PUCCH, PRACH, or another SRS resource, in fully-overlapped symbols or partially-overlapped symbol(s) in the same component carrier (CC) or different CCs in a band or a band combination. The overlapping of the SRS resource and the second uplink signal may result in conflicting requirements if the sum of the transmission power levels of the two transmissions is greater than the maximum or allowable power level of the UE 102. As a result, the UE 102 needs to adjust one or both the power levels.

The network entity 104 transmits 1522 the first control signaling that configures at least one SRS resource or SRS resource set with TDM based multi-port and a second uplink signal(s). The network entity 104 optionally transmits 524 the second control signaling to trigger the at least one SRS resource or SRS resource set. The UE 102 determines 1526 whether the at least one SRS resource or SRS resource set overlap with the second uplink signal(s). If so, the UE 102 may further determine 1526 the respective transmission powers for the SRS resource or resource set and the second uplink signal(s). For example, the UE 102 may perform power scaling to avoid a sum of the total transmission powers exceeding a ceiling or maximum power level. The UE 102 transmits 1528 the at least one SRS resource or SRS resource set and/or the second uplink signal(s) based on the determined transmission power. The network entity 104 receives 1530 the at least one SRS resource or SRS resource set.

The fully overlapped case or the partially overlapped case may be in regard of time domain and/or frequency domain. In some implementations, the network entity 104 receives the one or more capabilities of the UE 102 from a core network (e.g., Access and Mobility Management Function (AMF)). That is, the UE 102 may report the capabilities once and related network entities may receive the capabilities without receiving the report directly from the UE 102. In yet some implementations, the network entity 104 receives the one or more capabilities from another base station (e.g., gNB or eNB). Based on the one or more capabilities, the network entity 104 may configure at least one SRS resource in one SRS resource set with TDM based multi-port transmission and a second uplink signal(s).

The network entity 104 may configure the resource for the second uplink signal(s) by RRC signaling or MAC CE or DCI. The network entity 104 may transmit a second control signaling, e.g., MAC CE or DCI, triggering/activating the at least one SRS resource or SRS resource set. Then the UE 102 needs to determine the transmission power for the SRS resource or SRS resource set and the second uplink signal(s), and transmit the SRS and the second uplink signal(s) based on the determined transmission power.

In some implementations, the UE 102 may determine zero transmission power for the SRS or the second uplink signal(s). For example, the UE 102 drops the SRS or the second uplink signal(s). In some implementations, the UE 102 may apply non-zero transmission power and/or power scaling for the SRS and/or the second uplink signal(s) to make sure the total transmission power in overlapped symbol(s) does not exceed the maximum transmission power.

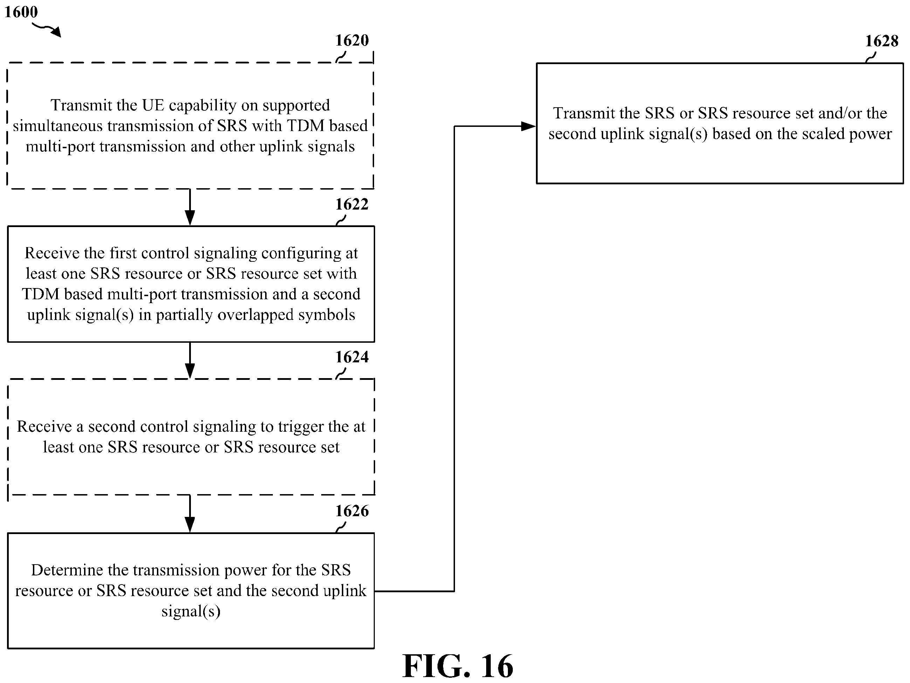

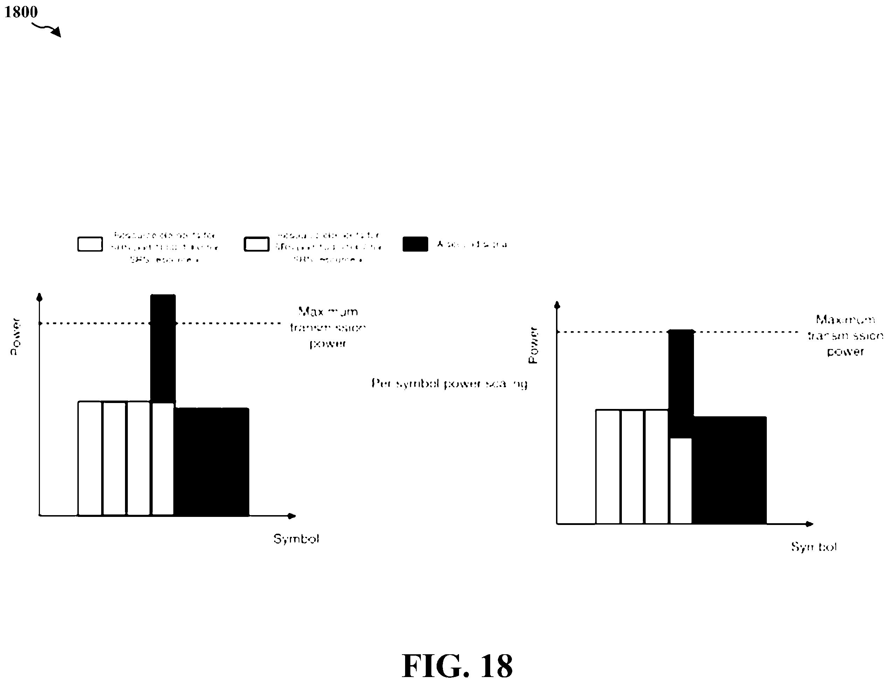

FIG. 16 is a flowchart of a method 1600 of wireless communications by a UE for multi-port SRS transmission overlapping with a second uplink signal, corresponding to the signaling diagram 1500 of FIG. 15 in accordance with aspects of this disclosure. The UE 102 of FIG. 15 may perform the method 1600. As shown, the UE optionally transmits 1620 the UE capability on supported simultaneous transmission of SRS with TDM based multi-port transmission and other uplink signals. The UE receives 1622 the first control signaling configuring at least one SRS resource or SRS resource set with TDM based multi-port transmission and a second uplink signal(s) in one or more common (e.g., partially overlapped) symbols (such as in the examples in FIGS. 18-23).

The UE optionally receives 1624 at second control signaling to trigger the at least one SRS resource or resource set. The UE determines 1626 the respective transmission power levels (e.g., by power scaling) for the SRS resource or SRS resource set and the second uplink signal(s), as further discussed with respect to FIGS. 18-23. The UE transmits 1628 the SRS or SRS resource set, and/or the second uplink signal(s) based on the scaled transmission powers.

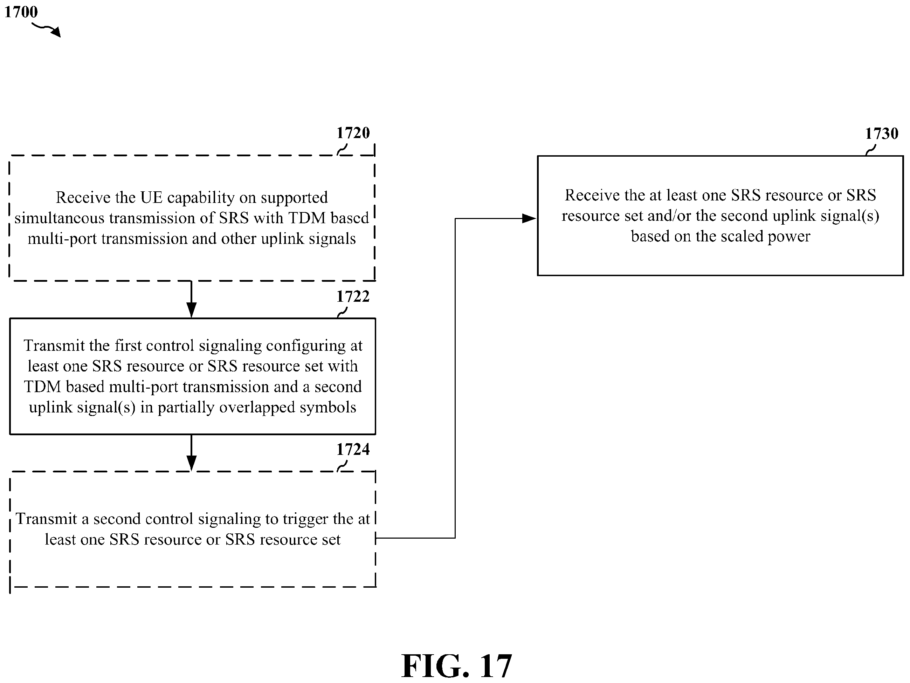

FIG. 17 is a flowchart of a method 1700 of wireless communications by a network entity for multi-port SRS transmission overlapping with a second uplink signal, in accordance with aspects of this disclosure. The network entity 104 of FIG. 15 may perform the method 1700, complementary to the method 1600 by the UE 102. As shown, the network entity optionally receives 1720 the UE capability on supported simultaneous transmission of SRS with TDM based multi-port transmission and other uplink signals. The network entity transmits 1722 the first control signaling that configures at least one SRS resource or SRS resource set with TDM based multi-port transmission and a second uplink signal(s) in one or more common symbols (e.g., partially overlapping symbols).

The network entity optionally transmits 1724 a second control signaling to trigger the at least one SRS resource or SRS resource set. The network entity receives 1730 the at least one SRS resource or SRS resource set and/or the second uplink signal(s) based on the power levels scaled by the UE. The following example aspects apply to both methods 1600 and 1700.

In an embodiment related to the UE's capability on SRS transmission power scaling, the UE transmits 1620 one or more UE capabilities indicating whether the UE supports simultaneous transmission of the SRS with TDM based multi-port transmission and a second uplink signal(s), e.g., PUSCH, PUCCH, PRACH, or SRS for other usage, in fully-overlapped symbols or partially-overlapped symbol(s) in the same component carrier (CC) or different CCs in a band or a band combination. The UE may further transmit 1620 a UE capability indicating whether it supports common power scaling factor for the SRS symbols from different ports. The UE may further transmit 1620 a UE capability indicating the supported maximum symbol offset between the two SRS symbols from different ports. Based on the UE's capabilities, the UE may perform various types of power scaling on the SRS and/or the second uplink signal.

FIG. 18 illustrates an example 1800 of power scaling per symbol when a multi-port SRS transmission overlaps with a second uplink signal, in accordance with aspects of this disclosure. The example 1800 illustrates an embodiment related to power scaling per symbol. As shown, in the overlapped symbol (e.g., the fourth symbol from the left where the SRS and the uplink signals are both scheduled for the same symbol), the UE applies the power scaling per symbol if the calculated transmission power for SRS and the second uplink signal(s) based on uplink power control parameters might exceed the maximum transmission power if not scaled. In the illustrated example, the UE reduces the power level of the SRS resource while maintaining the power level for the uplink signal. The total power levels may be less than or equal to the maximum transmission power (e.g., based on the UE class as well as other standard constraints).

In some implementations, the UE applies the power scaling on one of the SRS and the second uplink signal(s) based on priority levels. For example, the UE may change the power level on the one having a lower priority than the other. In some cases, the priority for the channels may be predefined or configured by the RRC signaling by the gNB. For example, the following uplink signals are arranged in descending priority levels:
1) PRACH transmission on the PCell or PSCell,
2) PUCCH or PUSCH transmissions with larger priority index,
3) PUCCH or PUSCH transmissions with same priority index,
4) PUCCH transmission with HARQ-ACK information, and/or scheduling request (SR), and/or link recovery request (LRR), and/or PUSCH transmission with HARQ-ACK information of the priority index, and/or Listen Before Talk (LBT) failure, and/or MAC CE for beam failure recovery,
5) PUCCH transmission with CSI or PUSCH transmission with CSI,
6) PUSCH transmission without HARQ-ACK information of the priority index or CSI and, for Type-2 random access procedure, PUSCH transmission on the PCell, and
7) SRS transmission, with aperiodic SRS having higher priority than semi-persistent and/or periodic SRS, or PRACH transmission on a serving cell other than the PCell.

In some implementations, the UE may use only some of the above priority levels above to determine which power level to scale. For example, the first six different types of uplink transmission signals may all have a higher priority level than the SRS transmission, while the priority levels among the first six types of uplink transmission signals do not follow the list above.

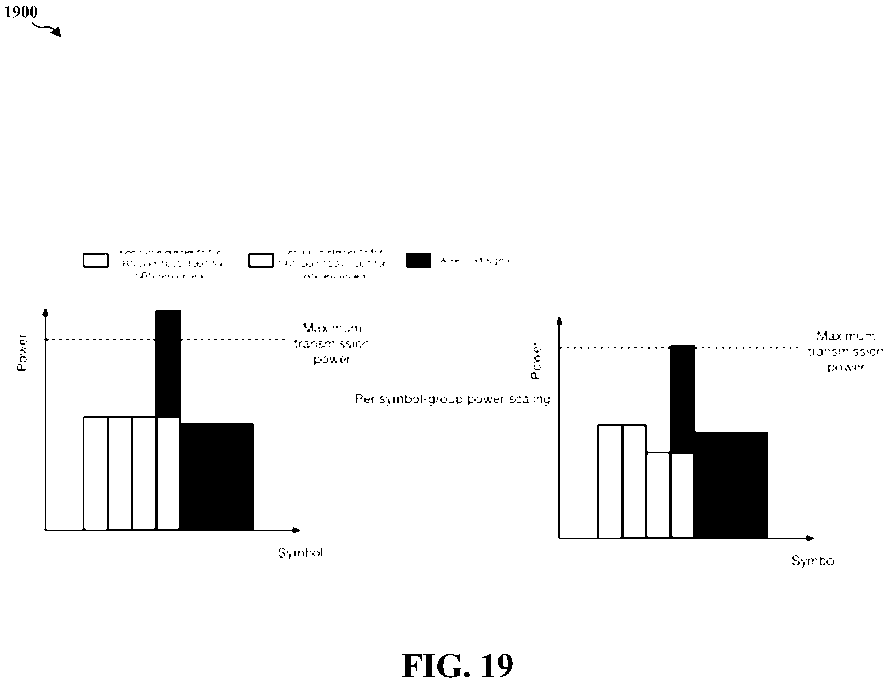

FIG. 19 illustrates an example 1900 of power scaling per symbol group when a multi-port SRS transmission overlaps with a second uplink signal, in accordance with aspects of this disclosure. The example 1900 illustrates an embodiment related to power scaling per symbol group. As shown, in a symbol group (the third and the forth symbols in FIG. 19) with all the transmission ports including at least one overlapped symbol, the UE applies the power scaling if the calculated transmission power for SRS and the second uplink signal(s) based on uplink power control parameters exceed the maximum transmission power.

As shown in FIG. 19, SRS symbol with different ports combination may be in the same SRS symbol group. That is, the first and the second SRS symbol are in the same SRS group; the third and the fourth SRS symbol are in the same SRS group. The symbol group may be defined as an SRS transmission occasion for power control. The UE applies the power scaling for the signals with lower priority. The priority for the channels may be predefined or configured by the RRC signaling by the gNB. In one example, the priority rule may be defined similar to the example priority levels above.

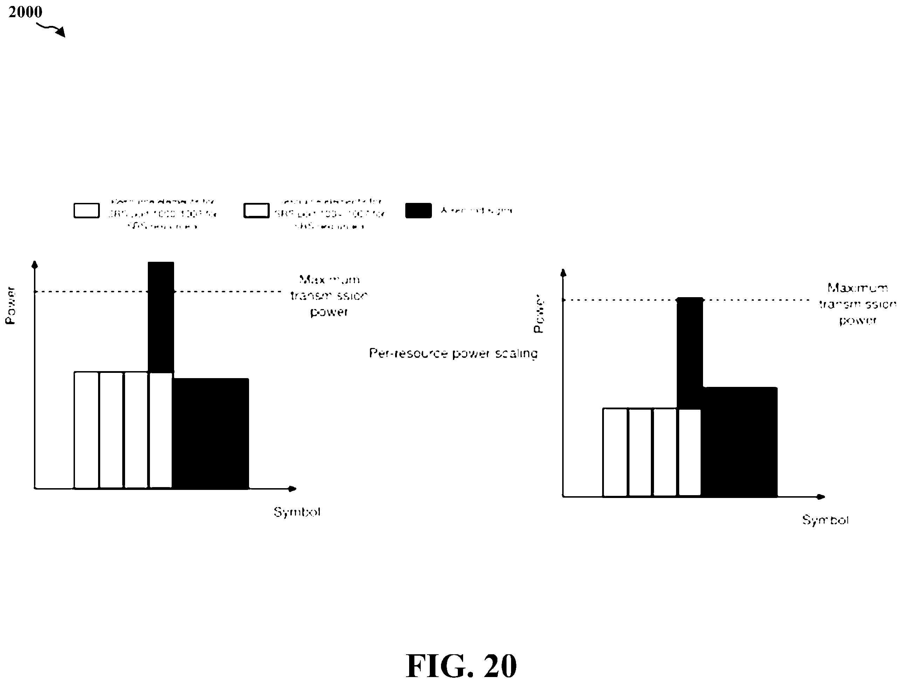

FIG. 20 illustrates an example 2000 of power scaling per resource when a multi-port SRS transmission overlaps with a second uplink signal, in accordance with aspects of this disclosure. The example 2000 illustrates an embodiment related to power scaling per SRS resource. As shown, for an SRS resource occupying the first four symbols and overlapping in at least one symbol with the second uplink signal, the UE applies the power scaling to all four symbols of the SRS resource. The SRS resource may be defined as an SRS transmission occasion for power control. The UE applies the power scaling for the signals with lower priority. The priority for the channels may be predefined or configured by the RRC signaling by the gNB. In one example, the UE may use similar priority rules as defined above.

In some cases, the UE may determine or change the transmission power per resource set (over multiple symbols). For example, for an SRS resource set including at least one overlapped symbol, the UE applies the power scaling if the calculated transmission power for SRS resource set and the second uplink signal(s) based on uplink power control parameters exceed the maximum transmission power. The SRS resource set may be defined as an SRS transmission occasion for power control. The UE applies the power scaling for the signals with lower priority. The priority for the channels may be predefined or configured by the RRC signaling by the gNB. In one example, the UE may use similar priority rules as defined above.

In the example implementations above (e.g., per symbol, per symbol group, per resource, and per resource set power scaling), the network entity may configure/indicate, to the UE, different value(s) of power scaling factor(s) for SRS and/or the second uplink signal(s) with different priority. The network entity may also configure/indicate, to the UE, the different value(s) of power scaling factor(s) for different transmission occasions of repetitions of the SRS. For example, value(s) of power scaling factors may be different for PUCCH transmission with HARQ-ACK information and PUCCH transmission CSI information. For example, value(s) of power scaling factors may be different for the first transmission occasion of SRS repetitions and the second transmission occasion of SRS repetitions.

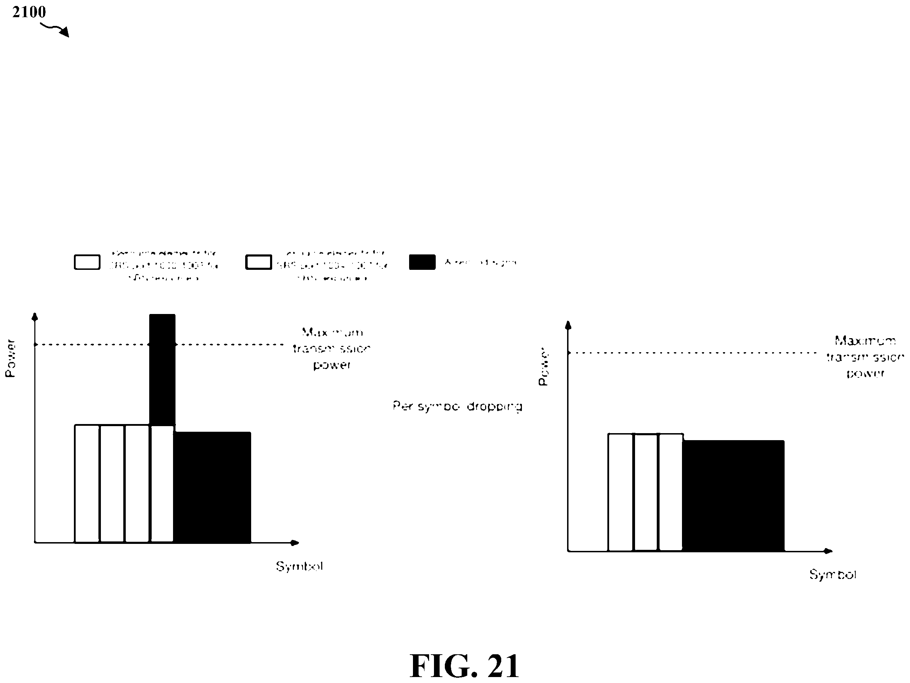

FIG. 21 illustrates an example 2100 of signal dropping per symbol when a multi-port SRS transmission overlaps with a second uplink signal, in accordance with aspects of this disclosure. As shown, instead of performing power scaling, the UE may decide to drop the SRS or the second uplink signal(s) on the symbol where overlapping occurs. As shown, the UE drops the second signal when the UE detects or determines that the sum of power levels of the SRS transmission and the second uplink signal exceeds the maximum transmission power.

In some implementations, whether to drop the SRS or the second uplink signal(s) may be predefined, which may be determined based on the time domain behavior of the SRS, time domain behavior for the second uplink signal(s), and content for the second uplink signal(s). In one example, if the second uplink signal is PUCCH and the SRS is periodic SRS, the SRS may be dropped. In another example, if the second uplink signal is periodic SRS and the SRS is transmitted via TDM based multi-port transmission, the periodic SRS may be dropped. In some implementations, whether to drop the SRS or the second uplink signal(s) may be configured by the gNB by RRC signaling. In some implementations, whether to drop the SRS or the second uplink signal(s) may be reported by the UE via UE capability.

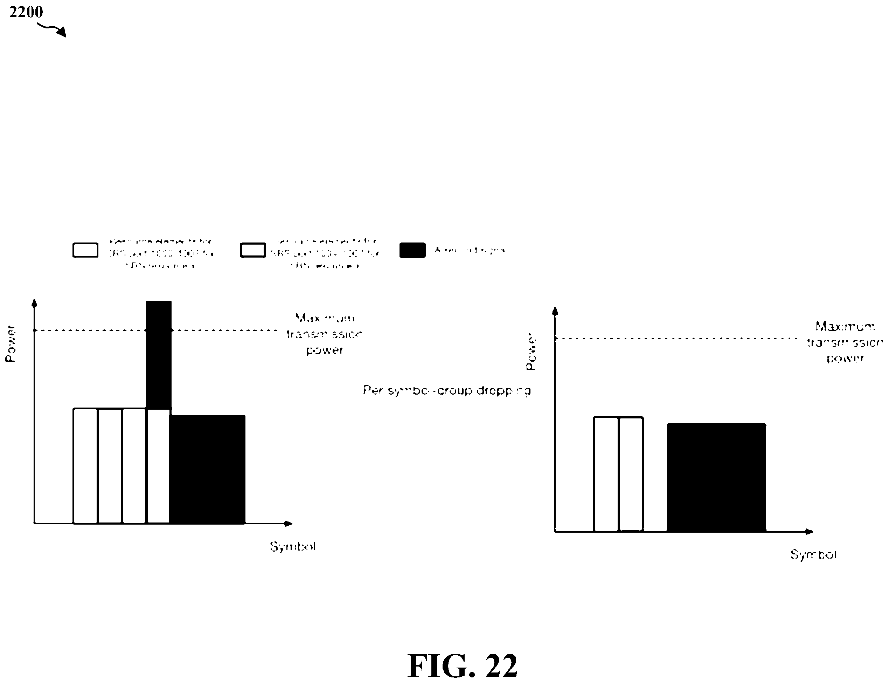

FIG. 22 illustrates an example 2200 of signal dropping per symbol group when a multi-port SRS transmission overlaps with a second uplink signal, in accordance with aspects of this disclosure. As shown, when in a symbol group with all the transmission ports overlaps with at least a symbol of the second uplink signal, the UE drops (scaling the power level to zero) the SRS(s) in the symbol group and transmits the complete second signal in all four symbols. In some cases, the UE may instead drop the second uplink signal and transmits the SRS in full.

In some implementations, whether to drop the SRS(s) in the symbol group or the second uplink signal(s) may be predefined, which may be determined based on the time domain behavior of the overlapped SRS, time domain behavior for the second uplink signal(s), and content for the second uplink signal(s). In one example, if the second uplink signal is PUCCH and the overlapped SRS is periodic SRS, the overlapped SRS may be dropped.

In another example, if the second uplink signal is periodic SRS and the overlapped SRS is transmitted via TDM based multi-port transmission, the periodic SRS may be dropped. In some implementations, whether to drop the SRS or the second uplink signal(s) may be configured by the gNB by RRC signaling. In some implementations, whether to drop the SRS or the second uplink signal(s) may be reported by the UE via UE capability.

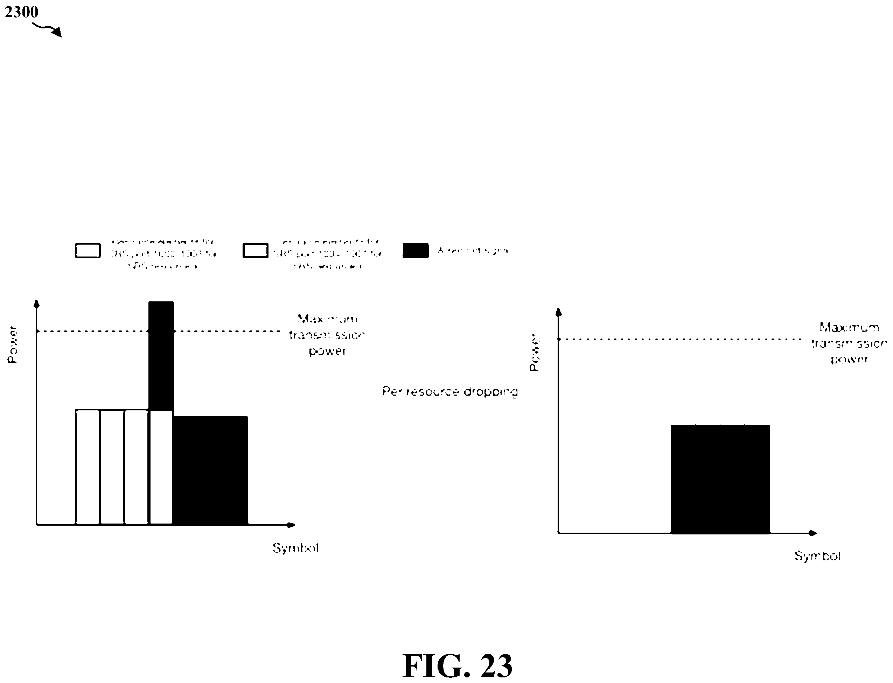

FIG. 23 illustrates an example 2300 of signal dropping per resource when a multi-port SRS transmission overlaps with a second uplink signal, in accordance with aspects of this disclosure. As shown, when an SRS resource share at least one common symbol with that of the second uplink signal, the UE may drop the SRS in the overlapping SRS resource. In some cases, the UE may drop the second uplink signal instead.

In some implementations, whether to drop the SRS or the second uplink signal(s) may be predefined, which may be determined based on the time domain behavior of the SRS, time domain behavior for the second uplink signal(s), and content for the second uplink signal(s). In one example, if the second uplink signal is PUCCH and the SRS is periodic SRS, the SRS may be dropped.

In another example, if the second uplink signal is periodic SRS and the SRS is transmitted via TDM based multi-port transmission, the periodic SRS may be dropped. In some implementations, whether to drop the SRS or the second uplink signal(s) may be configured by the gNB by RRC signaling. In some implementations, whether to drop the SRS or the second uplink signal(s) may be reported by the UE via UE capability.

In some cases, the UE may drop the SRS per resource set. For example, instead of per resource, the UE drops the SRS resource set or the second uplink signal(s). In some implementations, whether to drop the SRS resource set or the second uplink signal(s) may be predefined, which may be determined based on the time domain behavior of the SRS resource set, time domain behavior for the second uplink signal(s), and content for the second uplink signal(s).

In one example, if the second uplink signal is PUCCH and the SRS is periodic SRS, the SRS resource set containing the SRS may be dropped. In another example, if the second uplink signal is periodic SRS and the SRS is transmitted via TDM based multi-port transmission, the periodic SRS may be dropped. In some implementations, whether to drop the SRS resource set or the second uplink signal(s) may be configured by the gNB by RRC signaling. In some implementations, whether to drop the SRS resource set or the second uplink signal(s) may be reported by the UE via UE capability.

In some cases, the network entity may configure the UE over whether the UE performs power scaling or dropping over overlapping symbols of the SRS and the second uplink signal. For example, whether to implement any of the examples above may be based on the UE's simultaneous transmission capability of the SRS and the second uplink signal. If the UE is able to support simultaneous transmission of both signals, one of the above examples on power scaling may be predefined, or be configured by the network entity by RRC signaling, or reported by the UE via UE capability, or determined based on at least one predefined rule; otherwise, one of the above examples on signal dropping may be predefined, or be configured by the network entity by RRC signaling, or reported by the UE via UE capability, or determined based on at least one predefined rule.

In some implementations, the predefined rule to determine the time-domain granularity for SRS power scaling or dropping may include at least one of the following rules. According to a first rule, the UE determines the time domain granularity based on whether there is at least one symbol with the same port(s) as the symbol with power scaling or dropping that does not collide with any other uplink signal in time domain. In one example, if such symbol exists, the UE applies symbol-level power scaling or dropping; otherwise, the UE applies symbol-group or resource or resource set level power scaling.

According to a second rule, the UE determines the time domain granularity based on the time domain behavior for the SRS resource set. In one example, if the SRS resource set is periodic or semi-persistent SRS, the UE applies resource set level power scaling or dropping; otherwise, the UE applies symbol or symbol-group or resource level power scaling.

According to a third rule, the UE determines the time domain granularity based on the usage for the SRS resource set. In one example, if the SRS resource set is used for beam management, the UE applies symbol level power scaling or dropping; if the SRS resource set is used for codebook-based transmission, the UE applies symbol-group or resource level power scaling or dropping; if the SRS resource set is used for antenna switching, the UE applies resource set level power scaling or dropping. In another example, the network entity may refrain from configuring the TDM based multiple ports SRS for beam management.

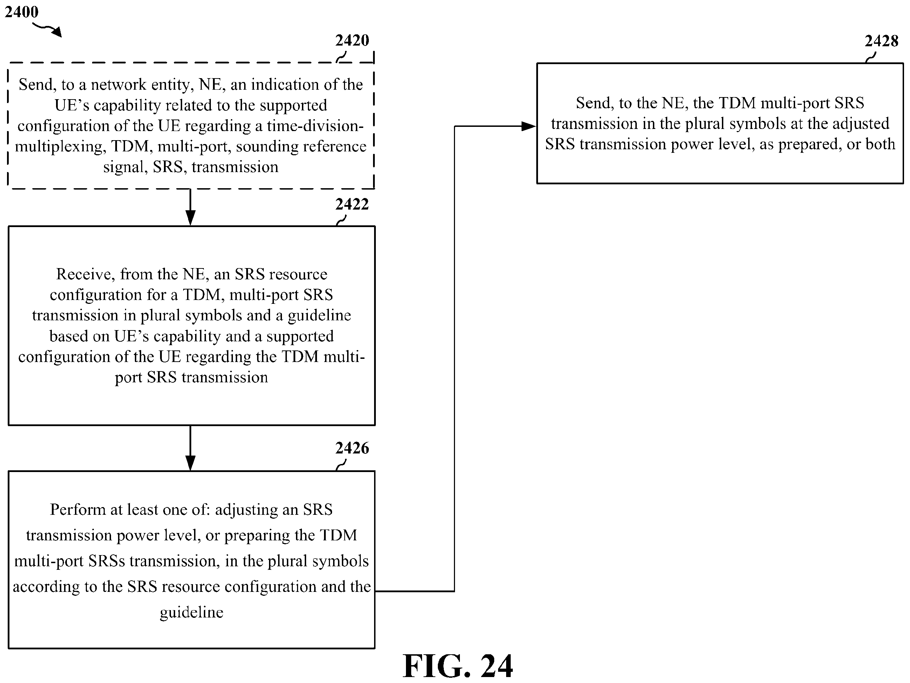

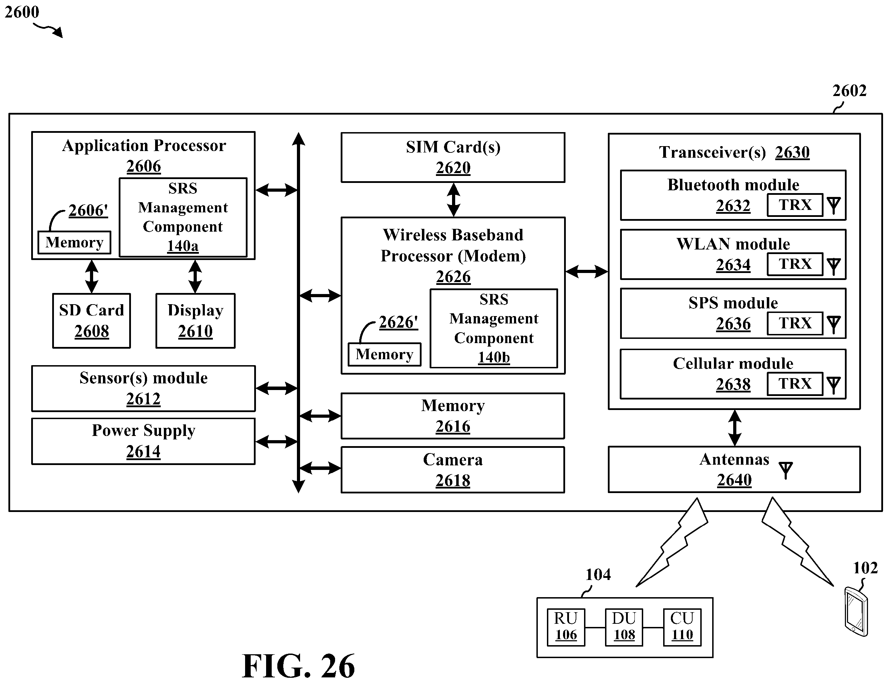

FIG. 24 illustrates a flowchart of a method 2400 of wireless communication at a UE. With reference to FIGS. 1 and 26, the method may be performed by the UE 102, the UE apparatus 2602, etc., which may include the memory 2626', 2606', 2616, and which may correspond to the entire UE 102 or the entire UE apparatus 2602, or a component of the UE 102 or the UE apparatus 2602, such as the wireless baseband processor 2626 and/or the application processor 2606.

In FIG. 24, the UE optionally sends 2420, to the network entity (NE), an indication of the UE's capability related to the supported configuration of the UE regarding the TDM multi-port SRS transmission.

The UE receives 2422, from the NE, a sounding reference signal, SRS, resource configuration for a TDM multi-port SRS transmission in plural symbols and a guideline based on UE's capability and a supported configuration of the UE regarding the TDM multi-port SRS transmission.

The UE performs 2426 at least one of adjusting an SRS transmission power level, or preparing the TDM multi-port SRSs transmission, in the plural symbols according to the SRS resource configuration and the guideline.

The UE sends 2428, to the NE, the TDM multi-port SRS transmission in the plural symbols at the adjusted SRS transmission power level, as prepared, or both.

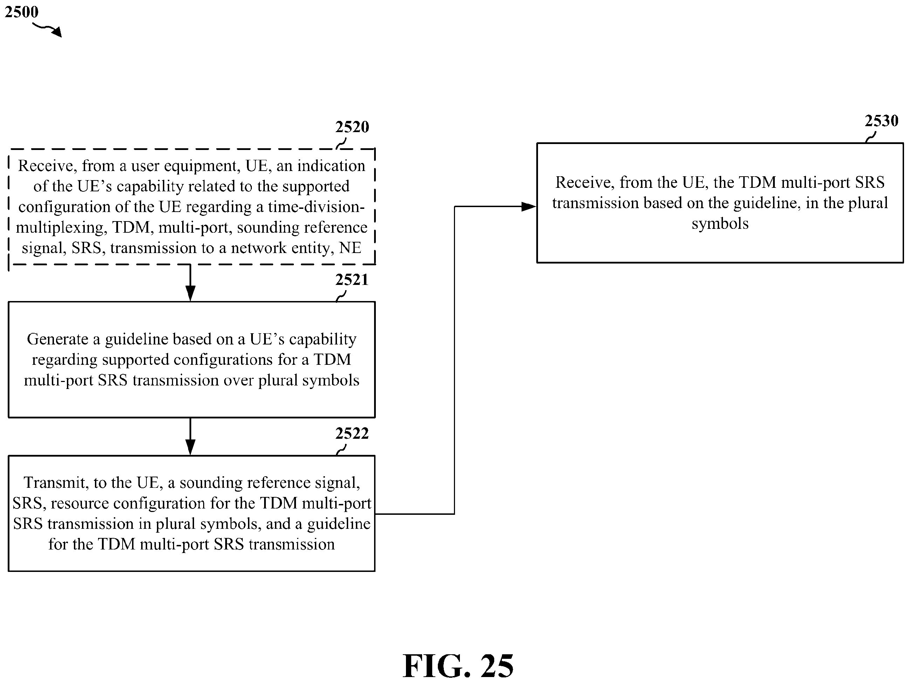

FIG. 24 describes a method 2400 from a UE-side of a wireless communication link, whereas FIG. 25 describes a method 2500 from a network-side of the wireless communication link.

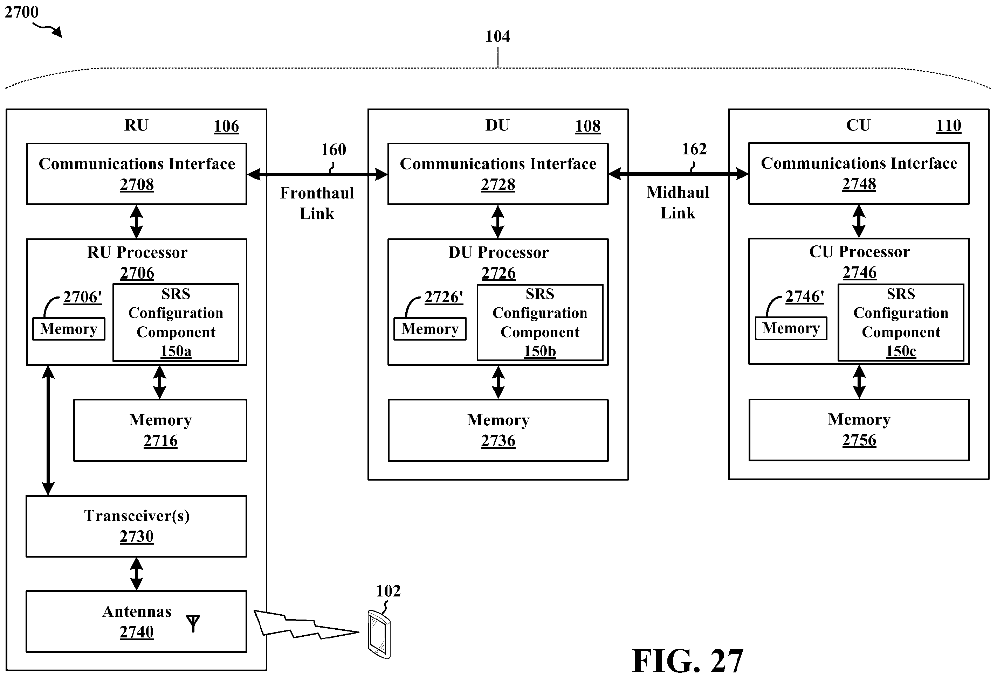

FIG. 25 illustrates the flowchart 2500 of a method of wireless communication at a network entity. With reference to FIGS. 1 and 27, the method may be performed by one or more network entities 104, which may correspond to a base station or a unit of the base station, such as the RU 106, the DU 1025, the CU 110, an RU processor 2706, a DU processor 2726, a CU processor 2746, etc. The one or more network entities 104 may include memory 2706'/2726'/2746', which may correspond to an entirety of the one or more network entities 104, or a component of the one or more network entities 104, such as the RU processor 2706, the DU processor 2726, or the CU processor 2746.

In FIG. 25, the network entity optionally receives 2520, an indication of the UE's capability related to the supported configuration of the UE regarding the TDM multi-port SRS transmission to the NE.

The network entity generates 2521 a guideline based on a UE's capability regarding supported configurations for a TDM multi-port SRS transmission over plural symbols.

The network entity transmits 2522 to the UE an SRS resource configuration for the TDM multi-port SRS transmission in plural symbols, and a guideline for the TDM multi-port SRS transmission.

The network entity receives 2530 from the UE the TDM multi-port SRS transmission based on the guideline, in the plural symbols. Detailed aspects of the methods 2400 and 2500 are discussed below.

In aspects, the UE's capability indicates one or more of: that the UE is able to transmit the TDM multi-port SRSs in the plural symbols using full power; that the UE is able to decrease the SRS transmission power level when SRS overlaps a second uplink signal; or that the UE supports plural configurations for the transmitting of the TDM multi-port SRSs.

In some cases, the UE's capability is specific to an SRS configuration, one symbol of an SRS configuration, one of UE's ports, a combination among the UE's ports, or the TDM multi-port SRS transmission. In some cases, the UE's capability is specified per feature set, per band, or per band combination.

In some cases, the UE may send the indication of the UE's capability by transmitting a single capability indication of a number of ports per symbol for full power transmission. In some cases, the UE may send the indication of the UE's capability by transmitting parameters related to the SRS configuration, the parameters including at least a number of available antenna ports and a type or usage of the multi-port SRS transmission. In some cases, the UE may send the indication of the UE's capability by identifying one or more of the available antenna ports for full power transmission. In some cases, the UE may send the indication of the UE's capability by transmitting a supported number of antenna ports for full power transmission for a physical uplink shared channel, PUSCH, and the TDM multi-port SRS transmission.

In aspects, the UE receives configuration and the guideline by receiving a first control signal including the SRS configuration. The UE may also receive a second control signal triggering the performing of at least one of: adjusting an SRS transmission power level, or preparing a transmission of the TDM multi-port SRSs in the plural symbols according to the SRS resource configuration and the guideline. The second control signal may include the guideline

In aspects, the guideline indicates an operation of the UE to maximize the SRS transmission power level. Accordingly, the UE adjusts the SRS transmission power level. In some cases, the adjusting of the SRS transmission power level includes increasing the SRS transmission power level to a full power level of the UE for at least one SRS resource.

In aspects, the guideline includes parameters for the preparing of the transmission of the TDM multi-port SRS transmission, and the performing includes the preparing of the transmission according to the parameters. In some cases, the UE generates the SRS using a comb offset and/or cyclic shift per port configuration. The UE may repeat or multiplex the TDM multi-port SRSs according to the parameters.

In some cases, the parameters include one or more of a repetition mode associated with the repetition of the SRS resource. The repetition mode specifies a relationship between the repetition of the SRS resource and the TDM based multiplexing for the multi-port SRS. The parameters may include an indication of whether the UE is to transmit an SRS resource or SRS resource set of the multi-port SRS using the repetition or the TDM based multiplexing.

The parameters may also include a symbol offset between SRS symbols from different antenna ports of the multi-port SRS, a number of ports per symbol, a symbol index per SRS symbol, a first symbol index for an SRS symbol group with SRS symbols from different ports, a comb offset for each SRS symbol, and a cyclic shift for each SRS symbol.

In some cases, the first control signal or the second signal includes a radio resource control (RRC) based message, a media access control (MAC) control element (CE) based message, or a downlink control information (DCI) based message. For example, the MAC CE based message may activates the SRS resource configured in the UE; or includes a dedicated MAC CE message separate from one that activates the SRS resource configured in the UE. The DCI based message may also trigger the SRS resource set configured in the UE; or is a dedicated DCI message separate from one that triggers the SRS resource set in the UE.

In some cases, the maximizing the SRS transmission power level includes splitting the full power level among the antenna ports per symbol. In some cases, the maximizing the SRS transmission power level includes splitting the full power level among symbols in the SRS resource based on the number of configured ports for each symbols.

In aspects, the receiving of the SRS resource configuration and the guideline further includes receiving a configuration for SRS resources for SRS repetition or multiplexing. The guideline does not configure a selection of the SRS repetition or multiplexing. The UE may select an order for the SRS repetition or multiplexing.

In aspects, the guideline indicates a presence of a simultaneous uplink signal transmission at least partially overlapping with the TDM multi-port SRS transmission, and the performing includes the adjusting of the SRS transmission power level. In some cases, the adjusting of the SRS transmission power level is performed for at least one of the plural symbols, if a sum of a scheduled power level of the simultaneous uplink signal transmission and the TDM multi-port SRS transmission exceeds a maximum transmission power of the UE.

In some cases, the adjusting of the SRS transmission power level includes at least one of: (a) scaling down a power level of the simultaneous uplink signal transmission and the SRS transmission power level so that the sum equals or is below the maximum transmission power of the UE; (b) reducing the SRS transmission power level so that the sum equals or is below the maximum transmission power of the UE; or (c) inhibiting the TDM multi-port SRS transmission for a resource overlapping with the simultaneous uplink signal transmission.

In some cases, the adjusting of the SRS transmission power level is performed based on a priority difference between the multi-port SRS transmission and the simultaneous uplink signal transmission. The adjusting of the SRS transmission power level is performed for: each symbol or a group of symbols of the multi-port SRS transmission; or each resource or resource set of the multi-port SRS transmission.

A UE apparatus 2602, as described in FIG. 26, may perform the method of flowchart 2400. The one or more network entities 104, as described in FIG. 27, may perform the method of flowchart 2500.

FIG. 26 is a diagram 2600 illustrating an example of a hardware implementation for a UE apparatus 2602. The UE apparatus 2602 may be the UE 102, a component of the UE 102, or may implement UE functionality. The UE apparatus 2602 may include an application processor 2606, which may have on-chip memory 2606'. In examples, the application processor 2606 may be coupled to a secure digital (SD) card 2608 and/or a display 2610. The application processor 2606 may also be coupled to a sensor(s) module 2612, a power supply 2614, an additional module of memory 2616, a camera 2618, and/or other related components. For example, the sensor(s) module 2612 may control a barometric pressure sensor/altimeter, a motion sensor such as an inertial management unit (IMU), a gyroscope, accelerometer(s), a light detection and ranging (LIDAR) device, a radio-assisted detection and ranging (RADAR) device, a sound navigation and ranging (SONAR) device, a magnetometer, an audio device, and/or other technologies used for positioning.

The UE apparatus 2602 may further include a wireless baseband processor 2626, which may be referred to as a modem. The wireless baseband processor 2626 may have on-chip memory 2626'. Along with, and similar to, the application processor 2606, the wireless baseband processor 2626 may also be coupled to the sensor(s) module 2612, the power supply 2614, the additional module of memory 2616, the camera 2618, and/or other related components. The wireless baseband processor 2626 may be additionally coupled to one or more subscriber identity module (SIM) card(s) 2620 and/or one or more transceivers 2630 (e.g., wireless RF transceivers).

Within the one or more transceivers 2630, the UE apparatus 2602 may include a Bluetooth module 2632, a WLAN module 2634, an SPS module 2636 (e.g., GNSS module), and/or a cellular module 2638. The Bluetooth module 2632, the WLAN module 2634, the SPS module 2636, and the cellular module 2638 may each include an on-chip transceiver (TRX), or in some cases, just a transmitter (TX) or just a receiver (RX). The Bluetooth module 2632, the WLAN module 2634, the SPS module 2636, and the cellular module 2638 may each include dedicated antennas and/or utilize antennas 2640 for communication with one or more other nodes. For example, the UE apparatus 2602 can communicate through the transceiver(s) 2630 via the antennas 2640 with another UE 102 (e.g., sidelink communication) and/or with a network entity 104 (e.g., uplink/downlink communication), where the network entity 104 may correspond to a base station or a unit of the base station, such as the RU 106, the DU 108, or the CU 110.

The wireless baseband processor 2626 and the application processor 2606 may each include a computer-readable medium / memory 2626', 2606', respectively. The additional module of memory 2616 may also be considered a computer-readable medium / memory. Each computer-readable medium / memory 2626', 2606', 2616 may be non-transitory. The wireless baseband processor 2626 and the application processor 2606 may each be responsible for general processing, including execution of software stored on the computer-readable medium / memory 2626', 2606', 2616. The software, when executed by the wireless baseband processor 2626 / application processor 2606, causes the wireless baseband processor 2626 / application processor 2606 to perform the various functions described herein. The computer-readable medium / memory may also be used for storing data that is manipulated by the wireless baseband processor 2626 / application processor 2606 when executing the software. The wireless baseband processor 2626 / application processor 2606 may be a component of the UE 102. The UE apparatus 2602 may be a processor chip (e.g., modem and/or application) and include just the wireless baseband processor 2626 and/or the application processor 2606. In other examples, the UE apparatus 2602 may be the entire UE 102 and include the additional modules of the apparatus 2602.

As discussed, the SRS management component 140 is configured to receive, from the base station 104 an SRS resource configuration for a TDM multi-port SRS transmission in plural symbols and a guideline based on the UE 102's capability and a supported configuration of the UE 102 regarding the TDM multi-port SRS transmission. The SRS management component 140 may be within the application processor 2606 (e.g., at 140a), the wireless baseband processor 2626 (e.g., at 140b), or both the application processor 2606 and the wireless baseband processor 2626. The SRS management component 140a-140b may be one or more hardware components specifically configured to carry out the stated processes/algorithm, implemented by one or more processors configured to perform the stated processes/algorithm, stored within a computer-readable medium for implementation by the one or more processors, or a combination thereof.

The UE apparatus 2602 may include a variety of components configured for various functions. In examples, the UE apparatus 2602, and in particular the wireless baseband processor 2626 and/or the application processor 2606, includes means for sending, to the NE, an indication of the UE's capability related to the supported configuration of the UE regarding the TDM multi-port SRS transmission, means for receiving, from a network entity, NE, (104), a sounding reference signal, SRS, resource configuration for a time-division-multiplexing, TDM, multi-port SRS transmission in plural symbols and a guideline based on UE's capability and a supported configuration of the UE regarding the TDM multi-port SRS transmission; means for performing at least one of: adjusting an SRS transmission power level, or preparing the TDM multi-port SRSs transmission, in the plural symbols according to the SRS resource configuration and the guideline; and means for sending, to the NE, the TDM multi-port SRS transmission in the plural symbols at the adjusted SRS transmission power level, as prepared, or both. The means may be the SRS management component 140a-140b of the UE apparatus 2602 configured to perform the functions recited by the means.

FIG. 27 is a diagram 2700 illustrating an example of a hardware implementation for one or more network entities 104. The one or more network entities 104 may be a base station, a component of a base station, or may implement base station functionality. The one or more network entities 104 may include, or may correspond to, at least one of the RU 106, the DU, 108, or the CU 110. The CU 110 may include a CU processor 2746, which may have on-chip memory 2746'. In some aspects, the CU 110 may further include an additional module of memory 2756 and/or a communications interface 2748, both of which may be coupled to the CU processor 2746. The CU 110 can communicate with the DU 108 through a midhaul link 162, such as an F1 interface between the communications interface 2748 of the CU 110 and a communications interface 2728 of the DU 108.

The DU 108 may include a DU processor 2726, which may have on-chip memory 2726'. In some aspects, the DU 108 may further include an additional module of memory 2736 and/or the communications interface 2728, both of which may be coupled to the DU processor 2726. The DU 108 can communicate with the RU 106 through a fronthaul link 160 between the communications interface 2728 of the DU 108 and a communications interface 2708 of the RU 106.

The RU 106 may include an RU processor 2706, which may have on-chip memory 2706'. In some aspects, the RU 106 may further include an additional module of memory 2716, the communications interface 2708, and one or more transceivers 2730, all of which may be coupled to the RU processor 2706. The RU 106 may further include antennas 2740, which may be coupled to the one or more transceivers 2730, such that the RU 106 can communicate through the one or more transceivers 2730 via the antennas 2740 with the UE 102.

The on-chip memory 2706', 2726', 2746' and the additional modules of memory 2716, 2736, 2756 may each be considered a computer-readable medium / memory. Each computer-readable medium / memory may be non-transitory. Each of the processors 2706, 2726, 2746 is responsible for general processing, including execution of software stored on the computer-readable medium / memory. The software, when executed by the corresponding processor(s) 2706, 2726, 2746 causes the processor(s) 2706, 2726, 2746 to perform the various functions described herein. The computer-readable medium / memory may also be used for storing data that is manipulated by the processor(s) 2706, 2726, 2746 when executing the software. In examples, the SRS configuration component 150 may sit at any of the one or more network entities 104, such as at the CU 110; both the CU 110 and the DU 108; each of the CU 110, the DU 108, and the RU 106; the DU 108; both the DU 108 and the RU 106; or the RU 106.

As discussed, the SRS configuration component 150 is configured to generate a guideline based on the UE 102's capability regarding supported configurations for a TDM multi-port SRS transmission over plural symbols. The SRS configuration component 150 provides the UE 102 (and the base station 104 transmits to the UE 102) an SRS resource configuration for the TDM multi-port SRS transmission in plural symbols, and a guideline for the TDM multi-port SRS transmission. The base station 104 then receives from the UE 102 the TDM multi-port SRS transmission based on the guideline, in the plural symbols. The SRS configuration component 150 may be within one or more processors of the one or more network entities 104, such as the RU processor 2706 (e.g., at 150a), the DU processor 2726 (e.g., at 150b), and/or the CU processor 2746 (e.g., at 150c). The SRS configuration component 150a-150c may be one or more hardware components specifically configured to carry out the stated processes/algorithm, implemented by one or more processors 2706, 2726, 2746 configured to perform the stated processes/algorithm, stored within a computer-readable medium for implementation by the one or more processors 2706, 2726, 2746, or a combination thereof.

The one or more network entities 104 may include a variety of components configured for various functions. In examples, the one or more network entities 104 include means for receiving an indication of the UE's capability related to the supported configuration of the UE regarding the TDM multi-port SRS transmission to the network entity 104, means for generating a guideline based on a user equipment's, UE's, capability regarding supported configurations for a time-division-multiplexing, TDM, multi-port SRS transmission over plural symbols; means for transmitting, to the UE, a sounding reference signal, SRS, resource configuration for the TDM multi-port SRS transmission in plural symbols, and a guideline for the TDM multi-port SRS transmission; and means for receiving, from the UE, the TDM multi-port SRS transmission based on the guideline, in the plural symbols. The means may be the SRS configuration component 150a-150c of the one or more network entities 104 configured to perform the functions recited by the means.

The specific order or hierarchy of blocks in the processes and flowcharts disclosed herein is an illustration of example approaches. Hence, the specific order or hierarchy of blocks in the processes and flowcharts may be rearranged. Some blocks may also be combined or deleted. Dashed lines may indicate optional elements of the diagrams. The invention is defined by the appended claims.

The detailed description set forth herein describes various configurations in connection with the drawings and does not represent the only configurations in which the concepts described herein may be practiced. The detailed description includes specific details for the purpose of providing a thorough explanation of various concepts. However, these concepts may be practiced without these specific details. In some instances, well known structures and components are shown in block diagram form in order to avoid obscuring such concepts.

Aspects of wireless communication systems, such as telecommunication systems, are presented with reference to various apparatuses and methods. These apparatuses and methods are described in the following detailed description and are illustrated in the accompanying drawings by various blocks, components, circuits, processes, call flows, systems, algorithms, etc. (collectively referred to as "elements"). These elements may be implemented using electronic hardware, computer software, or combinations thereof. Whether such elements are implemented as hardware or software depends upon the particular application and design constraints imposed on the overall system.

An element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems-on-chip (SoC), baseband processors, field programmable gate arrays (FPGAs), programmable logic devices (PLDs), state machines, gated logic, discrete hardware circuits, and other similar hardware configured to perform the various functionality described throughout this disclosure. One or more processors in the processing system may execute software, which may be referred to as software, firmware, middleware, microcode, hardware description language, or otherwise. Software shall be construed broadly to mean instructions, instruction sets, code, code segments, program code, programs, subprograms, software components, applications, software applications, software packages, routines, subroutines, objects, executables, threads of execution, procedures, functions, or any combination thereof.

If the functionality described herein is implemented in software, the functions may be stored on, or encoded as, one or more instructions or code on a computer-readable medium, such as a non-transitory computer-readable storage medium. Computer-readable media includes computer storage media and can include a random-access memory (RAM), a read-only memory (ROM), an electrically erasable programmable ROM (EEPROM), optical disk storage, magnetic disk storage, other magnetic storage devices, combinations of these types of computer-readable media, or any other medium that can be used to store computer executable code in the form of instructions or data structures that can be accessed by a computer. Storage media may be any available media that can be accessed by a computer.

Aspects, implementations, and/or use cases described herein may be implemented across many differing platform types, devices, systems, shapes, sizes, and packaging arrangements. For example, the aspects, implementations, and/or use cases may come about via integrated chip implementations and other non-module-component based devices, such as end-user devices, vehicles, communication devices, computing devices, industrial equipment, retail/purchasing devices, medical devices, artificial intelligence (Al)-enabled devices, machine learning (ML)-enabled devices, etc. The aspects, implementations, and/or use cases may range from chip-level or modular components to non-modular or non-chip-level implementations, and further to aggregate, distributed, or original equipment manufacturer (OEM) devices or systems incorporating one or more techniques described herein.

Devices incorporating the aspects and features described herein may also include additional components and features for the implementation and practice of the claimed and described aspects and features. For example, transmission and reception of wireless signals necessarily includes a number of components for analog and digital purposes, such as hardware components, antennas, RF-chains, power amplifiers, modulators, buffers, processor(s), interleavers, adders/summers, etc. Techniques described herein may be practiced in a wide variety of devices, chip-level components, systems, distributed arrangements, aggregated or disaggregated components, end-user devices, etc., of varying configurations.

The description herein is provided to enable a person skilled in the art to practice the various aspects described herein. Various modifications to these aspects will be readily apparent to those skilled in the art, and the generic principles defined herein may be applied to other aspects. The invention is defined by the appended claims.

Reference to an element in the singular does not mean "one and only one" unless specifically stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The terms "may", "might", and "can", as used in this disclosure, often carry certain connotations. For example, "may" refers to a permissible feature that may or may not occur, "might" refers to a feature that probably occurs, and "can" refers to a capability (e.g., capable of). The phrase "For example" often carries a similar connotation to "may" and, therefore, "may" is sometimes excluded from sentences that include "for example" or other similar phrases.

Unless specifically stated otherwise, the term "some" refers to one or more. Combinations such as "at least one of A, B, or C" or "one or more of A, B, or C" include any combination of A, B, and/or C, such as A and B, A and C, B and C, or A and B and C, and may include multiples of A, multiples of B, and/or multiples of C, or may include A only, B only, or C only. Sets may be interpreted as a set of elements where the elements number one or more.

Unless otherwise specifically indicated, ordinal terms such as "first" and "second" do not necessarily imply an order in time, sequence, numerical value, etc., but are used to distinguish between different instances of a term or phrase that follows each ordinal term. Reference numbers, as used in the specification and figures, are sometimes cross-referenced among drawings to denote same or similar features. A feature that is exactly the same in multiple drawings may be labeled with the same reference number in the multiple drawings. A feature that is similar among the multiple drawings, but not exactly the same, may be labeled with reference numbers that have different leading numbers, but have one or more of the same trailing numbers (e.g., 206, 306, 406, etc., may refer to similar features in the drawings). Sometimes an "X" is used to universally denote multiple variations of a feature. For instance, "X06" can universally refer to all reference numbers that end in "06" (e.g., 206, 306, 406, etc.).

The invention is defined by the appended claims. The words "module," "mechanism," "element," "device," and the like may not be a substitute for the word "means." As such, no claim element is to be construed as a means plus function unless the element is expressly recited using the phrase "means for." As used herein, the phrase "based on" shall not be construed as a reference to a closed set of information, one or more conditions, one or more factors, or the like. In other words, the phrase "based on A", where "A" may be information, a condition, a factor, or the like, shall be construed as "based at least on A" unless specifically recited differently.

## Claims

1. A method for wireless communications, the method performed by a user equipment, UE, (102), the method comprising:
receiving, from a network entity, NE, (104), a sounding reference signal, SRS, resource configuration for a time-division-multiplexing, TDM, multi-port SRS transmission in a plurality of symbols based on at least one of a UE capability or a UE-supported configuration for the TDM multi-port SRS transmission;
splitting an SRS transmission power based on a number of configured ports for a symbol of the plurality of symbols; and
transmitting, to the NE, the TDM multi-port SRS transmission in the plurality of symbols using the split SRS transmission power.

2. The method of claim 1, further comprising:
sending, to the NE, an indication of the at least one the UE capability or the UE-supported configuration.

3. The method of any of claims 1 or 2, wherein the at least one of the UE capability or the UE-supported configuration indicates one or more of:
that the UE is able to transmit the TDM multi-port SRS transmission in the plurality of symbols using full power;
that the UE is able to decrease the SRS transmission power when SRS overlaps a second uplink signal; or
that the UE supports a plurality of configurations for the transmitting of the TDM multi-port SRS transmission.

4. The method of any of claims 1 to 3, wherein the UE capability is specific to:
a specified SRS configuration,
one symbol of an SRS configuration,
one of a plurality of SRS ports, or
a port combination group including one or more of the plurality of SRS ports.

5. The method of any of claims 2 to 4, wherein the sending the indication of the UE capability comprises at least one of:
transmitting a single capability indication of a number of ports per symbol for full power transmission;
transmitting parameters related to the SRS configuration, the parameters including at least one of a number of available antenna ports of a type of usage of the multi-port SRS transmission;
identifying one or more of the available antenna ports for the splitting of the power; or
transmitting a supported number of antenna ports at full power for a physical uplink shared channel, PUSCH, and the TDM multi-port SRS transmission.

6. The method of any of claims 1 to 5, wherein the receiving of the SRS configuration includes:
receiving a first control signal including the SRS configuration, and
receiving a second control signal triggering at least one of:
splitting of the SRS transmission power, or
preparing of the transmission of the TDM multi-port SRS transmission in the plurality of symbols according to the SRS resource configuration .

7. The method of any of claims 1 to 6, wherein the splitting of the SRS transmission power comprises:
splitting, when full power transmission is enabled, a linear transmission power according to the number of configured ports for the symbol.

8. The method of any of claims 1 to 6, wherein the splitting of the SRS transmission power comprises:
increasing the SRS transmission power to a full power corresponding to UE's class for at least one SRS resource.

9. The method of claim 8, further comprising:
splitting the full power among antenna ports per symbol; or
splitting the full power among symbols in the SRS resource based on the number of configured ports for each symbols.

10. The method of any of claims 1 to 9, wherein the receiving of the SRS resource configuration further comprises:
receiving a configuration for SRS repetition or multiplexing of SRS resources; and
the method further comprises selecting, by the UE, an order for the SRS repetition or multiplexing.

11. The method of any of claims 1 to 10, further comprising:
receiving a presence of a simultaneous uplink signal transmission at least partially overlapping with the TDM multi-port SRS transmission, and
splitting of the SRS transmission power.

12. A method for wireless communications, the method performed by a network entity, NE, the method comprising:
transmitting, to a user equipment, UE, a sounding reference signal, SRS, resource configuration for a TDM multi-port SRS transmission in a plurality of symbols based on at least one of a UE capability or a UE-supported configuration for the TDM multi-port SRS transmission, causing the UE to split an SRS transmission power based on a number of configured ports for a symbol of the plurality of symbols; and
receiving, from the UE, the TDM multi-port SRS transmission based on the split SRS transmission power, in the plurality of symbols.

13. The method of claim 12, further comprising:
receiving an indication of the at least one of the UE capability or the UE-supported configuration for the TDM multi-port SRS transmission to the NE, wherein the UE capability indicates one or more of:
that the UE is able to transmit the TDM multi-port SRS transmission in the plurality of symbols using full power;
that the UE is able to decrease the SRS transmission power when SRS overlaps a second uplink signal; or
that the UE supports a plurality of configurations for the transmitting of the TDM multi-port SRS transmission.

14. A wireless communication device comprising a communication interface, and signal processing hardware connected to the communication interface, configured to cooperatively perform any of the methods of claims 1 to 13.

## Patentansprüche

1. Verfahren zur drahtlosen Kommunikation, wobei das Verfahren von einer Benutzerausrüstung, UE, (102) durchgeführt wird, wobei das Verfahren umfasst:
Empfangen, von einer Netzwerkentität, NE, (104), einer Tonreferenzsignal-, SRS-, Ressourcenkonfiguration für eine Zeitmultiplexing-, TDM-, Mehrport-SRS-Übertragung in einer Mehrzahl von Symbolen basierend auf mindestens einem von einer UE-Fähigkeit oder einer UE-unterstützten Konfiguration für die TDM-Mehrport-SRS-Übertragung;
Aufteilen einer SRS-Sendeleistung basierend auf einer Anzahl konfigurierter Ports für ein Symbol der Mehrzahl von Symbolen; und
Übertragen, an die NE, der TDM-Mehrport-SRS-Übertragung in der Mehrzahl von Symbolen unter Verwendung der aufgeteilten SRS-Sendeleistung.

2. Verfahren nach Anspruch 1, ferner umfassend:
Senden, an die NE, einer Angabe des mindestens einen von der UE-Fähigkeit oder der UE-unterstützten Konfiguration.

3. Verfahren nach einem der Ansprüche 1 oder 2, wobei das mindestens eine von der UE-Fähigkeit oder der UE-unterstützten Konfiguration eines oder mehrere von Folgendem angibt:
dass das UE in der Lage ist, die TDM-Mehrport-SRS-Übertragung in der Mehrzahl von Symbolen mit voller Leistung zu übertragen;
dass das UE in der Lage ist, die SRS-Sendeleistung zu verringern, wenn SRS ein zweites Uplink-Signal überlappt; oder
dass das UE eine Mehrzahl von Konfigurationen für das Übertragen der TDM-Mehrport-SRS-Übertragung unterstützt.

4. Verfahren nach einem der Ansprüche 1 bis 3, wobei die UE-Fähigkeit spezifisch für Folgendes ist:
eine bestimmte SRS-Konfiguration,
ein Symbol einer SRS-Konfiguration,
eines einer Mehrzahl von SRS-Ports oder
eine Portkombinationsgruppe, die eines oder mehrere der Mehrzahl von SRS-Ports beinhaltet.

5. Verfahren nach einem der Ansprüche 2 bis 4, wobei das Senden der Angabe der UE-Fähigkeit mindestens eines von Folgendem umfasst:
Übertragen einer einzelnen Fähigkeitsangabe einer Anzahl von Ports pro Symbol für eine Übertragung mit voller Leistung;
Übertragen von Parametern, die sich auf die SRS-Konfiguration beziehen, wobei die Parameter mindestens eines von einer Anzahl verfügbarer Antennenports einer Nutzungsart der Mehrport-SRS-Übertragung beinhalten;
Identifizieren eines oder mehrerer der verfügbaren Antennenports für das Aufteilen der Leistung; oder
Übertragen einer unterstützten Anzahl von Antennenports mit voller Leistung für einen physischen gemeinsam genutzten Uplink-Kanal, PUSCH, und die TDM-Mehrport-SRS-Übertragung.

6. Verfahren nach einem der Ansprüche 1 bis 5, wobei das Empfangen der SRS-Konfiguration Folgendes beinhaltet:
Empfangen eines ersten Steuersignals, das die SRS-Konfiguration beinhaltet, und
Empfangen eines zweiten Steuersignals, das mindestens eines von Folgendem auslöst:
Aufteilen der SRS-Sendeleistung oder
Vorbereiten der Übertragung der TDM-Mehrport-SRS-Übertragung in der Mehrzahl von Symbolen gemäß der SRS-Ressourcenkonfiguration.

7. Verfahren nach einem der Ansprüche 1 bis 6, wobei das Aufteilen der SRS-Sendeleistung Folgendes umfasst:
Aufteilen, wenn eine Übertragung mit voller Leistung aktiviert ist, einer linearen Sendeleistung entsprechend der Anzahl der konfigurierten Ports für das Symbol.

8. Verfahren nach einem der Ansprüche 1 bis 6, wobei das Aufteilen der SRS-Sendeleistung Folgendes umfasst:
Erhöhen der SRS-Sendeleistung auf eine volle Leistung entsprechend der Klasse des UE für mindestens eine SRS-Ressource.

9. Verfahren nach Anspruch 8, ferner umfassend:
Aufteilen der vollen Leistung auf die Antennenports pro Symbol; oder
Aufteilen der vollen Leistung unter den Symbolen in der SRS-Ressource basierend auf der Anzahl der konfigurierten Ports für jedes Symbol.

10. Verfahren nach einem der Ansprüche 1 bis 9, wobei das Empfangen der SRS-Ressourcenkonfiguration ferner Folgendes umfasst:
Empfangen einer Konfiguration für SRS-Wiederholung oder Multiplexing von SRS-Ressourcen; und
das Verfahren umfasst ferner Auswählen, durch das UE, einer Reihenfolge für die SRS-Wiederholung oder das Multiplexing.

11. Verfahren nach einem der Ansprüche 1 bis 10, ferner umfassend:
Empfangen eines Vorhandenseins einer gleichzeitigen Uplink-Signalübertragung, die sich zumindest teilweise mit der TDM-Mehrport-SRS-Übertragung überlappt, und
Aufteilen der SRS-Sendeleistung.

12. Verfahren zur drahtlosen Kommunikation, wobei das Verfahren von einer Netzwerkentität, NE, durchgeführt wird, wobei das Verfahren umfasst:
Übertragen, an eine Benutzerausrüstung, UE, einer Tonreferenzsignal-, SRS-, Ressourcenkonfiguration für eine TDM-Mehrport-SRS-Übertragung in einer Mehrzahl von Symbolen basierend auf mindestens einem von einer UE-Fähigkeit oder einer UE-unterstützten Konfiguration für die TDM-Mehrport-SRS-Übertragung, was das UE veranlasst, eine SRS-Sendeleistung basierend auf einer Anzahl konfigurierter Ports für ein Symbol der Mehrzahl von Symbolen aufzuteilen; und
Empfangen, von dem UE, der TDM-Mehrport-SRS-Übertragung basierend auf der aufgeteilten SRS-Sendeleistung, in der Mehrzahl von Symbolen.

13. Verfahren nach Anspruch 12, ferner umfassend:
Empfangen einer Angabe des mindestens einen von der UE-Fähigkeit oder der UE-unterstützten Konfiguration für die TDM-Mehrport-SRS-Übertragung an die NE,
wobei die UE-Fähigkeit eines oder mehrere von Folgendem angibt:
dass das UE in der Lage ist, die TDM-Mehrport-SRS-Übertragung in der Mehrzahl von Symbolen mit voller Leistung zu übertragen;
dass das UE in der Lage ist, die SRS-Sendeleistung zu verringern, wenn SRS ein zweites Uplink-Signal überlappt; oder
dass das UE eine Mehrzahl von Konfigurationen für das Übertragen der TDM-Mehrport-SRS-Übertragung unterstützt.

14. Drahtlose Kommunikationsvorrichtung, umfassend eine Kommunikationsschnittstelle und eine mit der Kommunikationsschnittstelle verbundene Signalverarbeitungshardware, die konfiguriert ist, um eines der Verfahren nach einem der Ansprüche 1 bis 13 gemeinsam auszuführen.

## Revendications

1. Procédé de communication sans fil, le procédé étant réalisé par un équipement utilisateur, UE, (102), le procédé comprenant :
la réception, à partir d'une entité de réseau, NE, (104), d'une configuration de ressources de signal de référence de sondage, SRS, pour une transmission SRS à ports multiples reposant sur un multiplexage par répartition dans le temps, TDM, dans une pluralité de symboles sur la base au moins d'une capacité de l'UE ou d'une configuration prise en charge par l'UE pour la transmission SRS à ports multiples TDM ;
la répartition d'une puissance de transmission SRS sur la base d'un nombre de ports configurés pour un symbole parmi la pluralité de symboles ; et
la transmission, vers la NE, de la transmission SRS à ports multiples TDM dans la pluralité de symboles à l'aide de la puissance de transmission SRS répartie.

2. Procédé selon la revendication 1, comprenant en outre :
l'envoi, vers la NE, d'une indication de l'au moins une parmi la capacité de l'UE ou la configuration prise en charge par l'UE.

3. Procédé selon l'une quelconque des revendications 1 ou 2, dans lequel l'au moins une parmi la capacité de l'UE ou la configuration prise en charge par l'UE indique l'un ou plusieurs parmi :
que l'UE est capable de transmettre la transmission SRS à ports multiples TDM dans la pluralité de symboles à pleine puissance ;
que l'UE est capable de diminuer la puissance de transmission SRS lorsque le SRS chevauche un second signal de liaison montante ; ou
que l'UE prend en charge une pluralité de configurations pour la transmission de la transmission SRS à ports multiples TDM.

4. Procédé selon l'une quelconque des revendications 1 à 3, dans lequel la capacité de l'UE est spécifique à :
une configuration SRS spécifiée,
un symbole d'une configuration SRS,
l'un d'une pluralité de ports SRS, ou
un groupe de combinaison de ports comportant l'un ou plusieurs parmi la pluralité de ports SRS.

5. Procédé selon l'une quelconque des revendications 2 à 4, dans lequel l'envoi de l'indication de la capacité de l'UE comprend au moins l'un parmi :
la transmission d'une seule indication de capacité d'un nombre de ports par symbole pour une transmission à pleine puissance ;
la transmission de paramètres liés à la configuration SRS, les paramètres comportant au moins l'un parmi un nombre de ports d'antenne disponibles ou un type d'utilisation de la transmission SRS à ports multiples ;
l'identification de l'un ou plusieurs des ports d'antenne disponibles pour la répartition de la puissance ; ou
la transmission d'un nombre pris en charge de ports d'antenne à pleine puissance pour un canal physique partagé de liaison montante, PUSCH, et la transmission SRS à ports multiples TDM.

6. Procédé selon l'une quelconque des revendications 1 à 5, dans lequel la réception de la configuration SRS comporte :
la réception d'un premier signal de commande comportant la configuration SRS, et
la réception d'un second signal de commande déclenchant au moins l'un parmi :
la répartition de la puissance de transmission SRS, ou
la préparation de la transmission de la transmission SRS à ports multiples TDM dans la pluralité de symboles selon la configuration de ressources SRS.

7. Procédé selon l'une quelconque des revendications 1 à 6, dans lequel la répartition de la puissance de transmission SRS comprend :
la répartition, lorsque la transmission à pleine puissance est activée, d'une puissance de transmission linéaire selon le nombre de ports configurés pour le symbole.

8. Procédé selon l'une quelconque des revendications 1 à 6, dans lequel la répartition de la puissance de transmission SRS comprend :
l'augmentation de la puissance de transmission SRS à une pleine puissance correspondant à la classe de l'UE pour au moins une ressource SRS.

9. Procédé selon la revendication 8, comprenant en outre :
la répartition de la pleine puissance entre les ports d'antenne par symbole ; ou
la répartition de la pleine puissance entre des symboles dans la ressource SRS sur la base du nombre de ports configurés pour chaque symbole.

10. Procédé selon l'une quelconque des revendications 1 à 9, dans lequel la réception de la configuration de ressources SRS comprend en outre :
la réception d'une configuration pour la répétition de SRS ou le multiplexage de ressources SRS ; et
le procédé comprend en outre la sélection, par l'UE, d'un ordre pour la répétition ou le multiplexage de SRS.

11. Procédé selon l'une quelconque des revendications 1 à 10, comprenant en outre :
la détection d'une présence d'une transmission de signal de liaison montante simultanée chevauchant au moins partiellement la transmission SRS à ports multiples TDM, et
la répartition de la puissance de transmission SRS.

12. Procédé de communication sans fil, le procédé étant réalisé par une entité de réseau, NE, le procédé comprenant :
la transmission, vers un équipement utilisateur, UE, d'une configuration de ressources de signal de référence de sondage, SRS, pour une transmission SRS à ports multiples TDM dans une pluralité de symboles sur la base au moins d'une capacité de l'UE ou d'une configuration prise en charge par l'UE pour la transmission SRS à ports multiples TDM, amenant l'UE à répartir une puissance de transmission SRS sur la base d'un nombre de ports configurés pour un symbole parmi la pluralité de symboles ; et
la réception, à partir de l'UE, de la transmission SRS à ports multiples TDM sur la base de la puissance de transmission SRS répartie, dans la pluralité de symboles.

13. Procédé selon la revendication 12, comprenant en outre :
la réception d'une indication de l'au moins une parmi la capacité de l'UE ou la configuration prise en charge par l'UE pour la transmission SRS à ports multiples TDM vers la NE, dans lequel la capacité de l'UE indique l'un ou plusieurs parmi :
que l'UE est capable de transmettre la transmission SRS à ports multiples TDM dans la pluralité de symboles à pleine puissance ;
que l'UE est capable de diminuer la puissance de transmission SRS lorsque le SRS chevauche un second signal de liaison montante ; ou
que l'UE prend en charge une pluralité de configurations pour la transmission de la transmission SRS à ports multiples TDM.

14. Dispositif de communication sans fil comprenant une interface de communication et un matériel de traitement du signal connecté à l'interface de communication, le matériel étant configuré pour réaliser de manière coopérative l'un quelconque des procédés selon les revendications 1 à 13.
